# EUROPEAN PATENT APPLICATION

(11) **EP 3 479 904 A1**
(43) Date of publication of application: **08.05.2019**
(21) Application number: 17200071.3
(22) Date of filing: 06.11.2017
(51) Int. Cl.: B05B 1/16, F16K 5/04, B08B 3/02, B08B 9/08, B08B 9/093, F16K 11/085, B08B 3/14, B08B 17/02

(54) **DEVICE AND METHOD FOR CLEANING CONTAINERS**

(71) Applicant: LVP Engineering & Constructions, 9140 Temse (BE)
(72) Inventor: VAN POTTELBERGH, Erik, 9100 Sint-Niklaas (BE); VAN TROOS, Wouter, 9160 Lokeren (BE)
(74) Representative: De Clercq & Partners

(57) **Abstract**

The present invention provides valve (300) for a washing arm (200) for washing the interior of (insulated) containers (900) comprising at least two fluid passages (275, 280) and a valve (300) configured to close or open the first or the second fluid passage (275, 280). In addition, a device (100) for cleaning (insulated) containers (900) comprising said washing arm (200) is provided; and further also a line (500) for cleaning (insulated) containers (900) comprising said device (100). Moreover, methods for washing and/or drying (insulated) containers (900) are also provided.

## Description

### FIELD OF THE INVENTION

The present invention provides a washing arm for washing the interior of (insulated) containers comprising at least two fluid passages and a valve configured to close or open the first or the second fluid passage. In addition, a device for cleaning (insulated) containers comprising said washing arm is provided; and further also a line for cleaning (insulated) containers comprising said device. Moreover, methods for washing and/or drying (insulated) containers are also provided.

### BACKGROUND

Containers which are often insulated and used for shipping are valuable and widely used tools for maintaining the cold chain during transport in many industries. A cold chain is a supply-chain in which the temperature of goods is continually controlled at a depressed temperature. More specifically, an unbroken cold chain is an uninterrupted sequence of storage and transport wherein the temperature of goods is maintained in a given temperature range.

In many industries, such as pharmaceuticals, chemicals, and fresh foods; unbroken cold chains are useful for ensuring and/or extending the shelf life of products.

Containers, often insulated containers, are cleaned on a regular basis. Ideally, the cleaning procedure involves a washing cycle and a drying cycle. Typical state of the art systems perform the washing and drying cycles on two separate locations; first the interior of the container is washed with a washing installation, after which the container is moved, for instance with a conveyor belt, to a drying installation. The washing cycle serves to sanitize (insulated) containers, and the drying cycle ensures that cleaning agents and/or rinsing fluids are removed prior to reuse of the (insulated) containers. However, especially the washing cycle may be challenging when performed at relatively low temperatures. The leftover water results in ice build-up on the container walls, and can drip also drip on the surrounding area or along the transport line. The presence of ice not only makes it more difficult to dry the containers, but it may also damage the surrounding elements, such as corroding and blocking the conveyor belt, or result in a slipping hazard for the operators.

Therefore the frozen water has to be removed regularly to ensure safety and efficiency, which results in downtimes of the washing and cleaning cycles. The former could be avoided by washing with heated water or at higher temperatures, but it is undesired due to the costs and provision of heating equipment.

Therefore there is a need for cleaning and drying (insulated) containers speedily, and in an energy efficient way, at low temperatures, preferably slightly above 0°C.

Moreover, other difficulties arise during and after transport of the container from the washing installation to the drying installation. In particular, reclaiming the water becomes more difficult and cumbersome, since the water has to be collected from multiple locations or otherwise needs to be provided from an outside source. When considering that such installations easily handle hundreds of containers on a daily basis, the combined cost of time and resources lost on water can significantly add up.

Additionally, present water reclamation systems require frequent maintenance to ensure that the water stays clean and does not clog up as a result of excessive sludge (e.g. carton packaging, dirt and food leftovers). However, to keep up with the ever-increasingly short transport deadlines the maintenance is sometimes sped up or altogether skipped, which results in the use of unclean water. Cleaning containers with unclean water causes the washing cycle to not sufficiently sanitize the containers, and also puts additional stress on the reclamation systems (e.g. sludge and bacteria build-up).

Therefore there is also a need for device for washing containers without excessive water loss, while still keeping clean and sanitized water, and preferably requiring little to no maintenance.

### SUMMARY OF THE INVENTION

In a first aspect, the present invention encompasses a valve for a washing arm comprising a first body and a second body;
- the first body comprising a cylindrical conduit having a base and circumference; the conduit comprising an elongated opening spanning an angle α along the conduit's circumference, and an annular opening disposed adjacent to an extremity of the elongated opening and closer to the conduit's base relative to the elongated opening;
- the second body comprising a cylindrical housing having a circumference and base greater than that of the first body; the housing comprising a first and a second fluid passage projecting perpendicularly out of the housing's circumference; wherein the second fluid passage is oriented at an angle β along the housing's circumference relative to the first fluid passage; preferably wherein the second fluid passage is closer to the housing's base relative to the first fluid passage;
- wherein the angle α is greater than or at least equal to the angle β, preferably at most 15°; more preferably 10°; most preferably 5° or less;
- wherein the second body is disposed over the first body whereby the annular opening is configured to align with the first fluid passage and the elongated opening is configured to align with the second fluid passage; and,
- wherein the second body is configured to rotate relative to the first body to close or open the first and/or the second fluid passage.

In some preferred embodiments, the elongated opening spans an angle α of at least 40° to at most 60° along the conduit's circumference; preferably 45° to 55°, more preferably 48° to 52°, most preferably 50°; and the second fluid passage is oriented at an angle β of at least 35° to 55° along the housing's circumference relative to the first fluid passage, more preferably 40° to 50°, more preferably 43° to 47°, most preferably 45°.

In some preferred embodiments, the valve comprises a third body; the third body comprising two openings corresponding with the first and the second fluid passage of the second body;
wherein the third body is attached to the second body and disposed between the first body and the second body; and,
wherein the third body is configured to allow, preferably improve, rotation of the second body relative to the first body.

In a further aspect, the present invention encompasses a washing arm for washing an interior of containers for food, medical or pharmaceutical products; the washing arm comprising:
- a valve; most preferably a valve according to the first aspect or preferred embodiments thereof;
- a sprinkling tube connected to the first fluid passage and comprising a sprinkling means;
- a rinsing tube connected to the second fluid passage;
- a fluid supply connected to the valve; preferably a water supply.

In some preferred embodiments, the washing arm comprises an actuator configured for rotating the second body relative to the first body; preferably wherein the actuator is a pneumatic cylinder.

In some preferred embodiments, the washing arm comprises a container characterization means configured for determining the container type and/or dimensions, wherein the washing arm is configured for executing a specific container washing program based on the determined container type and/or dimensions.

In a further aspect, the present invention encompasses a device for cleaning containers for food, medical or pharmaceutical products; the device comprising:
- a washing arm; most preferably a washing arm according to the second aspect or preferred embodiments thereof; and,
- a drying means.

In some preferred embodiments, the drying means is a drying arm and the washing arm is fastened to the drying arm, for example by a fastening means of the outer body; preferably fastened via the actuator; preferably via the pneumatic cylinder.

In some preferred embodiments, the drying means is configured to start drying automatically after the washing arm finishes washing.

In a further aspect, the present invention encompasses a line for cleaning containers for food, medical or pharmaceutical products; the containers comprising a top surface, a bottom surface, a back surface, two side surfaces and a container door; the line comprising:
- at least one device; most preferably a device according to the third aspect or preferred embodiments thereof;
- a fluid filtration system; preferably water filtration system;
- an optional container transportation means, preferably comprising a chain conveyor belt and at least one mechanical stopper; and,
- an optional enclosure.

In some preferred embodiments, the line comprises one of more of the following:
- a bottom surface cover, comprising a sheet or a plate configured to shield the bottom surface during cleaning;
- a container door washing device for washing the container door; and/or,
- a back surface cover, comprising a set of sheets or plates that are configured to shield the back surface during cleaning.

In some preferred embodiments, the fluid filtration system comprises the following devices:
- a first filtering device configured for a first filtering of fluid, preferably coarser filtering of waste and/or contaminants with a larger diameter;
- a second filtering device configured for a second filtering of fluid, preferably moderate filtering of waste and/or contaminants with a medium diameter;
- a third filtering device configured for a second filtering of fluid, preferably finer filtering of waste with and/or contaminants with a smaller diameter;
- a purification device, preferably an UV-light emitting device; and,
- a flushing device for flushing the line to remove remaining waste/or contaminants, preferably into a reservoir, and,
- a suction device for collecting fluid and providing flow.

In a further aspect, the present invention encompasses a method for cleaning containers for food, medical or pharmaceutical products comprising a top surface, a bottom surface, a back surface, two side surfaces and a container door, the method comprising the steps of:
a. providing a line; most preferably a line according to the fourth aspect or preferred embodiments thereof;
b. optionally, transporting a container using the container transportation means towards a washing arm according to the second aspect or preferred embodiments thereof;
c. optionally, covering the bottom surface of the container with a bottom surface cover;
d. washing the interior of the container with the washing arm; and,
e. drying the container with a drying means, preferably a drying arm.

In some preferred embodiments, step c. comprises the steps of:
c1. covering the back surface of the container with a back surface cover; and,
c2. washing the container door with a door-washing system.

In some preferred embodiments, the method further comprises the steps of:
- flushing the line with the flushing device, preferably into a reservoir;
- filtering the collected water with the filtration system; and,
- recycling the filtered as a cleaning agent, or as a component in a cleaning agent mixture, for container cleaning.

### BRIEF DESCRIPTION OF THE DRAWINGS

The following description of the figures of specific embodiments of the invention is merely exemplary in nature and is not intended to limit the present teachings, their application or uses. Throughout the drawings, corresponding reference numerals indicate like or corresponding parts and features.

The following numbering refers to: (100) device for cleaning containers; (200) washing arm; (220) pneumatic cylinder; (250) water supply; (270) sprinkling tube; (271) sprinkling tube check valve; (275) sprinkling means; (280) rinsing tube; (281) rinsing tube check valve; (300) valve for a washing arm; (310) first body; (320) cylindrical conduit; (330) elongated opening; (340) annular opening; (350) second body; (355) fastening means; (360) cylindrical housing; (370) first fluid passage; (380) second fluid passage; (390) third body; (395) sealing member; (400) drying means; (500) line for cleaning containers; (505) water supply line; (510) bottom surface cover; (520) container door washing device; (525) container sensor; (530) back surface cover; (550) container transportation means; (600) filtration system; (610) first filtering device; (615) perforated plate; (620) scraping device; (625) reservoir; (630) second filtering device; (635) perforated structure; (640) casing; (641) lid; (642) window; (645) flow-in flange; (646) flow-out flange; (650) third filtering device; (670) purification device; (680) flushing device; (685) flushing pores; (690) suction device; (900) container; (900) container top surface; (900) container back surface; (900) container bottom surface; (900) container door. Additionally, angle α is also referred to as the elongated opening angle; angle β as the fluid passage angle; and angle γ as the rotational angle.
**Figure 1** shows a first body (310) from a valve (300) for a washing arm (200); **Figure 1A** in a side-view and **Figure 1B** in a front-view.
**Figure 1C** shows a second body (350) from a valve (300) for a washing arm (200) in a side-perspective.
**Figure 1D** shows a third body (390) from a valve (300) for a washing arm (200) in a side-perspective.
**Figure 2** shows a part of a valve (300') for a washing arm (200), wherein the third body (390) is disposed over the first body (310); **Figure 2A** in a side-perspective and **Figure 2B** in a frontal perspective.
**Figure 3** shows an embodiment of a valve (300) for a washing arm (200) wherein the second body (350) is disposed over the first body (310); **Figure 3A** in a side-perspective and **Figure 3B** in a rear perspective.
**Figure 4** shows an embodiment of a valve (300) for a washing arm (200) wherein the second body (350) is disposed over the first body (310); **Figure 4A** in a side-perspective and **Figure 4B** in a rear perspective.
**Figure 5** shows an embodiment of a valve (300) for a washing arm (200) wherein the second body (350) is disposed over the first body (310); **Figure 5A** in a side-perspective and **Figure 5B** in a rear perspective.
**Figure 6** shows an embodiment of a washing arm (200) for washing an interior of containers for food, medical or pharmaceutical products.
**Figure 7** is a schematic of the washing arm's (200) mode of operation; in particular,
**Figure 7A** shows the washing arm (200) in a first, neutral position; **Figure 7B** shows the washing arm (200) in a second, sprinkling position, wherein the sprinkling tube (270) is raised to enable fluid flow; and **Figure 7C** shows the washing arm (200) in a third, rinsing position, wherein the rinsing tube (280) is lowered to enable fluid flow.
**Figure 8** shows an embodiment of a device (100) for cleaning containers for food, medical or pharmaceutical products.
**Figure 9** shows an embodiment of a bottom surface cover (510) for shielding a container bottom surface.
**Figure 10** shows an embodiment of a line (500) for cleaning containers (900) for food, medical or pharmaceutical products, the line (500) comprising a device (100) and a bottom surface cover (510).

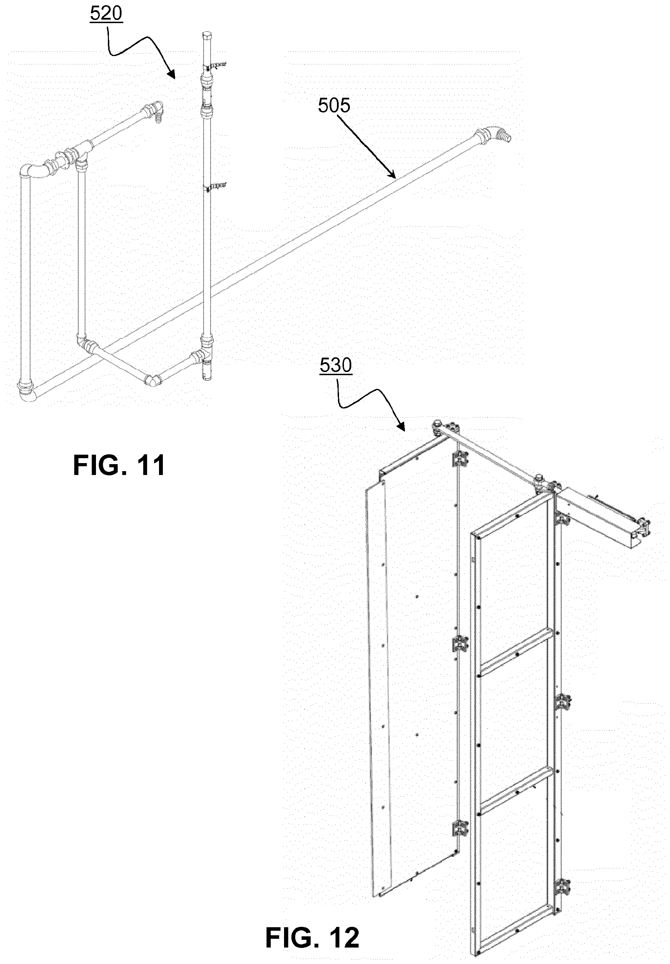

**Figure 11** shows an embodiment of a door-washing device (520) for washing a container door.
**Figure 12** shows an embodiment of a back surface cover (530) for shielding a container back surface.
**Figure 13** shows an embodiment of a line (500) for cleaning containers (900) for food, medical or pharmaceutical products, the line (500) comprising a device (100) for cleaning containers, a container door washing device (520), a back surface cover (530), a container transportation means (550), and an enclosure (570); in particular **Figure 13A** in a side-view; and **Figure 13A** in a rear-view.
**Figure 14A** shows an embodiment of a line (500) for cleaning containers (900) for food, medical or pharmaceutical products, comprising a flushing device (680); and **Figure 14B** shows a close-up of the flushing device (680) comprising a plurality of flushing pores (685).
**Figure 15** shows an embodiment of a first filtering device's (610) components; in particular **figure 15A** shows an elevated perforated plate (615); and **figure 15B** shows a scraping device (620).
**Figure 16** shows an embodiment of a second filtering device (610); in particular **figure 16A** shows the components in a stacked-view, which comprise a perforated structure(635), a casing (640), a lid (641) comprising a window (642), and entry (645) and exit (646) flanges; **figure 16B** shows the second filtering device (630) in a side-view; and **figure 16C** shows the second filtering device (510) in a top-view.
**Figure 17** shows an embodiment of a (water) filtration system (600) comprising a first filtering device (610), a second filtering device (510) and a suction device (690).
**Figure 18** shows an embodiment of a line (500) for cleaning containers for food, medical or pharmaceutical products, the line (500) comprising an enclosure (570) and a (water) filtration system (600' and 600"), the filtration system (600) comprising first filtering device (610), a second filtering device (630), a third filtering device (650), a purification device (670) and a suction device (690); in particular **Figure 18A** in a side-view; and **Figure 18B** in a rear-view.
**Figure 19** shows an embodiment of a line (500) for cleaning containers for food, medical or pharmaceutical products in a top-view.
**Figure 20** shows an embodiment of a container (900) for food, medical or pharmaceutical products, the container (900) comprising a top surface, a bottom surface (910), a back surface (930), two side surfaces and a container door (920).

### DETAILED DESCRIPTION

The present invention will be described with respect to particular embodiments but the invention is not limited thereto but only by the claims. Any reference signs in the claims shall not be construed as limiting the scope thereof.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited members, elements or method steps also include embodiments which "consist of" said recited members, elements or method steps.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The term "about" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1% or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

All documents cited in the present specification are hereby incorporated by reference in their entirety.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In one or more aspects, the present invention relates to a washing arm for washing the interior of (insulated) containers comprising at least two fluid passages and a valve configured to close or open the first or the second fluid passage. In addition, a device for cleaning (insulated) containers comprising said washing arm is provided; and further also a line for cleaning (insulated) containers comprising said device. Moreover, methods for washing and/or drying (insulated) containers are also provided.

In general, the present invention may provide for highly effective, fast, cost and/or energy-efficient device for cleaning of containers. Additionally the devices may be more durable and/or user-friendly, may require less space and/or maintenance, and/or has improved safety when compared to state of art devices. Importantly, the device provides for a means to reduce water waste and/or improve water quality, in particular recycled water quality.

The term "washing" as used herein when referring to (insulated) containers refers to the application of one or more cleaning agents, preferably one or more cleaning agents in an aqueous solution, to an (insulated) container's inner hull and/or to an (insulated) container's outer hull with the express purpose of removing contaminants. An example of a cleaning agent may be water, or a mixture comprising water and a commercial cleaning agent. The term washing may also include the application of one or more rinsing agents, preferably one or more aqueous rinsing agents, after the application of one or more cleaning agents. Rinsing agents may aid the removal of cleaning agent residues.

The term "drying" as used herein refers to the removal of fluid (e.g. liquid, such as water or cleaning agents in an aqueous solution) from surfaces, for example the surface of (insulated) containers; in particular to the removal of one or more cleaning or rinsing agents as described above.

The term "cleaning" as used herein refers to washing-drying sequences; in particular a sequence comprising washing followed by drying as described above.

The "containers" as referred to herein generally relate to (insulated) objects for holding and transporting of products; in particular for (fresh) food, medical or pharmaceutical products. The containers may have, for example, a substantially rectangular base area with sides of about 1200 mm and 800 mm, i.e. roughly corresponding to the base euro pallets. The height of the (insulated) containers may be between 1.75 m and 2.15 m, but may be higher or lower as well. The inner hull of (insulated) containers commonly comprises one or more hooks configured for holding one or more ice packs. Typically, the (insulated) containers comprise a top surface, a bottom surface, a back surface, and two side surfaces. Also, the (insulated) containers comprise container doors forming the front surface, which are preferably opened during washing and drying such that their interior hull may be easily reached for cleaning.

In a first aspect, the present invention relates to a valve for a washing arm, the valve comprising a first body and a second body;
- the first body comprising a cylindrical conduit having a base and circumference; the conduit comprising an elongated opening spanning an elongated opening angle α along the conduit's circumference, and an annular opening disposed adjacent to an extremity of the elongated opening and closer to the conduit's base relative to the elongated opening;
- the second body comprising a cylindrical housing having a circumference and base greater than that of the first body; the housing comprising a first and a second fluid passage projecting perpendicularly out of the housing's circumference; wherein the second fluid passage is oriented at a fluid passage angle β along the housing's circumference and is preferably closer to the housing's base relative to the first fluid passage;
- wherein the elongated opening angle α is greater than or at least equal to the fluid passage angle β, preferably at most 15°; more preferably 10°; most preferably 5° or less;
- wherein the second body is disposed over the first body whereby the annular opening is configured to align with the first fluid passage and the elongated opening is configured to align with the second fluid passage; and,
- wherein the second body is configured to rotate relative to the first body to close or open the first or the second fluid passage.

The typical process for washing an interior of a container comprises firstly a sprinkling step, in which the entire interior of the container is accurately sprinkled with a liquid (e.g. water or water comprising a cleaning agent) to loosen the waste (e.g. plastic foil, wood, packaging leftovers such as carton or paper, etc.) and contaminants present in the interior, and secondly a rinsing step, in which the loosened waste is flushed out of the interior, for instance by water under high pressure and/or increased flow. Accordingly, a typical system for washing an interior of a container will require two different water supply lines or at least two separate connections thereto. As a result the complexity (e.g. multiple water supply lines, valves, fittings and connectors) and efficiency (e.g. less available space, more material costs and maintenance required) of the system increases while the user-friendliness decreases. Moreover, during operation significant resources may be lost (e.g. leaking water, increased water consumption, higher chance of breakage or clogging).

The valve according to one or more embodiments herein provides a solution to one or more of the above problems by providing for a washing and/or cleaning system (e.g. a washing arm and/or a device for cleaning containers, discussed further below) with only a single water supply line to perform both the sprinkling and the rinsing step in sequence, thereby saving space and manufacturing costs (e.g. fewer components require less space). Moreover, because the sprinkling water directly follows into the rinsing water, there may be significantly less to no waste of resources (e.g. water or cleaning agent) during operation. Moreover, the reduced complexity may reduce maintenance costs and is easier to repair and/or replace in the case of a malfunction.

The first body may be a semi-open cylindrical conduit, which has one closed and one open base, or it may be an open cylindrical conduit, which has two open bases wherein one base is closed with a sealing member; for example a stop plug. Similarly, the second body may be a semi-open cylindrical housing with one closed base, or it may be an open cylindrical conduit closed with a sealing member. A cylindrical object is characterized by a base and a height; wherein the bases are the typically flat ends congruent and parallel to each other, and the height is the distance between the two bases. The circumference is the enclosing boundary of the cylinder's curved wall. Accordingly, the radius of the bases determines the circumference.

The elongated opening of the first body may be elliptical or oval shaped, but may also be rectangular shaped, or any other geometric configuration that allows for sufficient fluid passage. The dimension of the elongated opening is be characterized by two parameters: its length, and its width; with the width being smaller than the length; preferably several times smaller. The length is measured along the conduit's circumference, and the width is measured along the height of the conduit, which runs parallel to the length.

Since the elongated opening's length can easily vary with the conduit's dimensions (e.g. increasing diameter), the length is preferably characterized by the elongated opening angle α, which is defined as the angle the elongated opening spans as measured along the conduit's circumference. If the elongated opening is ellipse-shaped, the elongated opening's height is determined by the diameter of equivalent circles comprising said shape.

In some preferred embodiments the elongated opening angle α is chosen to be greater than the length of the annular opening, for example 30°, 35°, 40°, 45°, 55°, 60°, 65° 70°, and so on. Preferably, the elongated opening angle α is at least 45° to at most 55°; more preferably 48° to 53°; most preferably 49° to 51°; for example 50°. The inventors found that the listed angles for α, in particular an angle of around 50°, provide for a very efficient timing window for the water to be redirected from the sprinkling tube to the rinsing tube. In particular, the relation of said angle α with the fluid passage angle β and rotational angle γ result in a closing of the rinsing tube during sprinkling, and an automatic opening of the rinsing tube and closing of the sprinkling tube when the second body is rotated relative to the first body past a selected angle. The functionality of the valve is explained in more detail below.

In some embodiments the elongated opening diameter is chosen to be equal or greater than the diameter of the annular opening; for example 5 mm, 10 mm, 15 mm, 20 mm, 25 mm, 30 mm, 35 mm, 40 mm, 45 mm, 50 mm, and so on. Preferably, the elongated opening diameter is at least 10 to at most 45 mm; more preferably 15 to 30 mm; most preferably 20 to 25 mm; for example 22mm. The listed dimensions are particularly well suited for commonly utilised pipe fittings, such as for ¾ inch tubing and corresponding connectors. This improves integration of the present valve with existing tools and fittings, additionally allowing for easier maintenance during malfunction.

The annular opening of the first body may be circular shaped, but it may also be rectangular shaped, or any other geometric configuration that allows for sufficient fluid passage; most preferably the annular opening is circular, which may further reduce the chance of leakage. Accordingly, when circular the dimension of the elongated opening is characterized by the diameter. Preferably the annular opening's diameter is equal to or smaller than the elongated opening's diameter.

The elongated opening and the annular opening are disposed in the cylindrical conduit's wall in a way that both openings overlap along the conduit's circumference, yet are separated along the conduit's height. In particular, the annular opening disposed adjacent to an extremity of the elongated opening, and closer to the conduit's base relative to the elongated opening. These structural features result in the annular opening overlapping with the first fluid passage, and the elongated opening overlapping with the second fluid passage; as described in further detail below.

In some embodiments the first body is produced from a metal or metal alloy; preferably stainless steel, which may provide for improved material quality and corrosion resistance. The first body may be provided with a sealing member; such as a polymer (e.g. rubber) or composite (e.g. carbon or silicon) retaining ring, sealing ring; compression fittings, and the like. The sealing members may comprise O-rings. Other sealing members may also be suitable for the first body and the invention is by no means limited to a particular sealing member.

Similarly to the first body, the second body may be a semi-open cylindrical housing, which has one closed and one open base, or it may be an open cylindrical housing, which has two open bases wherein one base is closed with a sealing member; for example a mechanical end face seal, which is a seal configured to maintain contact at a sealing interface during rotational movement. The latter may prevent fluid leaks, but also prevents the second body from sliding or rotating out of position relative to the first body.The second body comprises a first and a second fluid passage projecting perpendicularly out of the housing's circumference; the first and a second fluid are disposed perpendicularly on the housing's circumference and project outward from the housing, thereby creating two passages.

The first and the second fluid passages may be circular shaped, but may also be rectangular shaped, or any other geometric configuration that allows for sufficient fluid passage; most preferably first and the second fluid passages are circular, which may provide for a more efficient passage of fluid and connection to commonly used fittings and tubing. Accordingly, when circular the dimensions of the first and the second fluid passages are characterized by their respective diameter.

The first and the second fluid passages may have similar diameters, but they may also have different diameters; for example 5 mm, 10 mm, 15 mm, 20 mm, 25 mm, 30 mm, 35 mm, 40 mm, 45 mm, 50 mm, and so on. Preferably the first fluid passage has the same diameter as the second fluid passage.

Preferably, the first fluid passage diameter is at least 10 to at most 45 mm; more preferably 15 to 30 mm; most preferably 20 to 25 mm; for example 22 mm.

Preferably, the second fluid passage diameter is at least 10 to at most 45 mm; more preferably 15 to 30 mm; most preferably 20 to 25 mm; for example 22 mm. The listed dimensions may be particularly well suited for commonly utilised pipe fittings, such as for ¾ inch tubes and their connectors. This improves integration of the present valve with existing tools and fittings, additionally allowing for easier maintenance during malfunction. The first fluid passage and the second fluid passage are disposed in the cylindrical housing's wall in a way that both openings do not overlap along the housing's circumference, and are separated along the housing's height. In particular, the second fluid is disposed at a fluid passage angle β along the housing's circumference and is closer to the housing's base relative to the first fluid passage. This allows for the first fluid stream (i.e. sprinkling) to stop flowing when the second fluid stream (i.e. rinsing) is started as a result of the second body's rotation relative to the first body; as described in further detail below.

The fluid passage angle β is defined as the angle spanning along the housing's circumference as measured from the central point of the first fluid passage to the central point of the second fluid passage.

In some embodiments the fluid passage angle β is chosen to be smaller than or at the most equal to the elongated opening angle α, for example 30°, 35°, 40°, 45°, 55°, 60°, 65° 70°, and so on. Preferably, the fluid passage angle β is at least 15° smaller than or at most equal to elongated opening angle; more preferably 10°; most preferably 5° or less. More preferably, the fluid passage angle β is at least 35° to at most 55°; more preferably 40° to 50°; even more preferably 42° to 48°; most preferably 44° to 46°; for example 45°. The inventors have found that the listed angles, in particular an angle of around 45°, provide for a very efficient timing window for the water to be redirected from the sprinkling tube to the rinsing tube.

In some embodiments the second body is produced from a metal or metal alloy; preferably stainless steel, which may provide for an optimal balance of structural strength and water-resistance.

The second body may be provided with a fastening means; such as a plate or hooks that allow for fastening of the third body (and the valve) to a structure or device, such as a supportive member or actuator. Additionally, the fastening means may also ensure the valve is correctly oriented relative to a different structure or device, such as the drying means.

The second body is disposed over the first body whereby the annular opening aligns with the first fluid passage and the elongated opening aligns with the second fluid passage. Additionally, the first and/or the second body may comprise an alignment means, which allows for correctly aligning the bodies relative to each other, and maintaining said alignment during operation (e.g. prevent slipping). For example, a set of bores or grooves, which prevent misalignment or slipping during rotational movement.

The second body is configured to rotate relative to the first body to close and/or open the first or the second fluid passage. The rotation may be aided by a rotation means, such as rings or tracks that allow for a controlled rotation; or alternatively, it may be aided by a third body described below.

Preferably the valve comprises a stopping means, configured to stop the rotation of the second body relative to the first body at a rotational angle γ. The rotational angle γ is defined as the maximal angle the second body can rotate relative to the first body as measured along the rotational axis. The stopping means may be a stopping member, such as a latching object. The presence of a stopping means may prevent malfunction of the valve, thus preventing mechanical damage or unwanted leakage. Additionally or alternatively, the stopping means may be external; for instance provided by the actuator described below.

In some embodiments the rotational angle γ is chosen to larger than or at the most equal to the fluid passage angle β, for example 60°, 70°, 80°, 90°, 100°, and so on. Preferably the rotational angle γ is at least 80° to at most 100°; more preferably 85° to 95; most preferably 88° to 92°; for example 89°, for example 90°, for example 91°. In a most preferred embodiment the rotational angle γ is a multiple of the fluid passage angle β; preferably the double of the fluid passage angle β. For example, if the fluid passage angle β equals 45°, the rotational angle γ will be 90°. The latter allows for a particularly efficient embodiment of the washing arm.

Additionally, the valve may have one or two covered with a sealing member such as a mechanical end face seal, which is a seal configured to maintain contact at a sealing interface during rotational movement. Preferably the mechanical end face seal is a polytetrafluoroethylene (PTFE) sealing ring.

In some embodiments the valve comprises a third body; the third body comprising two openings corresponding with the first and the second fluid passage of the second body. Similarly to the first body and the second body, the third body has a cylindrical adapted to the dimensions of the first body and the second body.

The third body is disposed between the first body and the second body. Preferably, the third body's inner diameter is equal to the first body's outer diameter, and the third body's outer diameter is equal to the second body's inner diameter. This allows the third body to fit tightly between the first body and the second body, thereby preventing leaks or sideways movement. Preferably the third body has a height smaller than the first body and the second body. This allows the third body to be completely disposed within the third body, thus allowing the placement of thicker sealing means on one or each side thereof. In some embodiments the third body is affixed or fastened to the second body. The fixation prevents unwanted movement of the third body relative to the second body, such as sideway slips or over-rotation. The fixation may be permanent, such as click-in system or glue, or it may be non-permanent, such as screws and bores, which allows easier detachment for maintenance. Preferably, the third body comprises a set of bores or perforations for fastening of the third body to the second body by a fastening means, such as screws.

The third body is preferably configured to improve the rotation of the second body relative to the first body. The rotation may be further improved by rotating means configured to reduce friction during, such as carbon rings placed on grooves. The first body may also be provided with a sealing member; such as a polymer (e.g. rubber) or composite (e.g. carbon) retaining ring, sealing ring; compression fittings, and the like. In a particular embodiment the rotating means may also be a sealing member configured to additionally reduce or prevent fluid leaks, such as a polytetrafluoroethylene (PTFE) sealing ring.

In some embodiments the first body comprises a set of circular grooves on the outer conduit located near each base of the conduit; and the second and/or third body comprise a set of circular grooves on the inner housing that are configured to align with the grooves on the first body; preferably wherein the grooves of the first body and the second body are connected via a sealing member.

In some embodiments the third body is produced from a polymer or composite material; preferably Polytetrafluoroethylene (PTFE) which provides for low friction during rotation and limited moisture absorption.

In a most preferred embodiment, the base of the first body has an outer diameter (i.e. the distance from a first outer wall to a second outer wall crossing through the centre) of 70 mm and an inner diameter (i.e. the distance from a first inner wall to a second inner wall crossing through the centre) of 45 mm, which results in a wall thickness of 19 mm. The height of the cylindrical conduit of the first body is 106 mm. The elongated opening and the annular opening have a diameter of 22 mm; the distance from the centre of the elongated opening to the centre of the annular opening is 30 mm, which results in a distance from the border of the elongated opening to the border of the annular opening of at least 8 mm. The elongated opening angle spans for 50° along the circumference. Additionally, the first body may comprise two circular grooves near each base for sealing member, such as carbon rings; each groove having a width of 6 mm, with a distance between of 60 mm.

In a most preferred embodiment, the base of the second body has an outer diameter of 90 mm and an inner diameter of 77 mm, which results in a wall thickness of 13 mm. The height of the cylindrical housing of the second body is 92 mm. The first and the second fluid passage have a diameter of 22 mm; the distance from the centre of the first fluid passage to the centre of the second fluid passage is 30 mm, which results in a distance from the border of the first fluid passage to the border of the second fluid passage of at least 8 mm; and the projection height of the first and the second fluid passage perpendicular to the housing's circumference is 32 mm. Additionally, the second body may comprise a fastening means that extends 50 mm from the cylindrical housing, which may further comprise an opening with a diameter of 16 mm.

In a most preferred embodiment, the base of the third body has an outer diameter of 77 mm and an inner diameter of 70 mm, which results in a wall thickness of 7 mm. The height of the cylindrical housing of the second body is 77 mm. The first and the second fluid passage have a diameter of 22 mm; the distance from the centre of the first fluid passage to the centre of the second fluid passage is 30 mm, which results in a distance from the border of the first fluid passage to the border of the second fluid passage of at least 8 mm; and the projection height of the first and the second fluid passage perpendicular to the housing's circumference is 32 mm. Additionally, the second body may comprise a fastening means that extends 50 mm from the cylindrical housing, which may further comprise an opening with a diameter of 16 mm.

The skilled person understands that the inner and/or outer diameter of each body is preferably adjusted to fit with the corresponding outer and/or inner diameter of an adjacent body to reduce the risk of fluid leakage and prevent unwanted movement. Similar observations may hold true for the diameter of the elongated opening corresponding with the second fluid passage, and the annular opening corresponding with the first fluid passage.

In a further aspect, the present invention relates to a washing arm for washing an interior of containers for food, medical or pharmaceutical products the washing arm comprising:
- a valve; preferably according to one or more embodiments as described herein;
- a sprinkling tube connected to the first fluid passage and comprising a sprinkling means;
- a rinsing tube connected to the second fluid passage;
- a fluid supply connected to the valve.

The sprinkling tube connected to the first fluid passage is oriented at an angle relative to the rinsing tube connected to the second fluid passage, said angle corresponding with the fluid passage angle β of the valve.

The washing arm as described herein provides for a particularly efficient device for cleaning the interior hull of (insulated) containers. Typically after transporting food, medical or pharmaceutical products, the containers are left with waste and/or contaminants. To meet the safety and sanity regulations the container hull requires a thorough cleaning. However, because of the interior hull surface, in particular for insulated containers, this can be a cumbersome process. For instance, many stuck waste pieces (e.g. carton) may require high-pressure water and/or special cleaning agent, however these cleaning agent need to be rinsed from the container afterwards. As a result of the complexity typical washing installations require multiple connections (e.g. water supplies, tubes, valves, etc.) leading to a waste of space and/or resources. Connecting multiple and separated water supplies to a single rotating device can be particularly challenging and costly. For instance, it may require the presence of multiples valves, which each have separate operations (i.e. loss of time and resources) and connections, such as pipes and fittings (i.e. loss of space and complex maintenance). However, the washing arm as describes herein provides a solution to the above problems. In particular the presence of the valve as described above may allow for a single fluid supply to provide the necessary fluid for performing the sprinkling and rinsing during the washing of the container. This may eliminate the need for multiple connections and pipelines, thus reducing the complexity of the system and resources lost. Moreover, the single rotating motion of the washing arm (e.g. the valve's second body relative to the first body) allows the fluid guided to the sprinkling tube to be redirected to the rinsing tube, which may improve the cleaning times and may also reduce or even eliminate the waste of fluid.

A typical washing cycle with the washing arm proceeds as follows: Between washing cycles the washing arm is kept in a first, neutral position. The first position is characterized in that the sprinkling tube and the rinsing tube are both oriented away from the container, which rotates the second body over the first body's annular and elongated openings. Initially the water supply to the washing arm may be closed off by an external valve, which is preferably located in proximity of the washing arm. Alternatively, the water supply may be closed and opened by an automated system, for instance configured to open the water supply if the presence of a container and/or movement of the washing arm are detected.

At the start of a washing cycle the washing arm is raised to a second, sprinkling position. The second position is characterized in that the sprinkling tube is oriented towards the container, which rotates the second body over the first body until the first fluid passage aligns with the annular opening, thereby enabling a fluid flow through the valve into the sprinkling tube. Typically the rotational movement will also correspond with the rotational angle γ; for example 90°.

The liquid flow of the second position is maintained for a period of time. The time may me predetermined, for instance by a pre-set washing program; but it may also be varied, for instance based on the degree of waste present in the container the time may be adjusted to the time necessary for the sprinkling to sufficiently remove and/or loosen the present waste.

Afterwards, the washing arm is lowered into the third, rinsing position. The third position is characterized in that the rinsing tube is oriented towards the container, which rotates the second body over the first body until the second fluid passage aligns with the elongated opening, thereby closing off the fluid flow to the sprinkling tube while simultaneously enabling a fluid flow into the rinsing tube. Typically the third position is related to the fluid passage angle β; for example, if β is 45° and γ is 90°, the third position will be reached about halfway down. As a result of the first body's elongated opening a constant flow of liquid will continue to rinse the container until the washing arm returns to the first position. Afterwards, the water supply unit may be closed again.

As a result of the above washing cycle, the washing arm according to one or more embodiments herein allows for a washing and/or cleaning system with only a single fluid supply line to perform both a sprinkling and a rinsing step in sequence, thereby saving space and manufacturing costs (e.g. fewer components require less space). Moreover, because the sprinkling water directly follows into the rinsing water, there is no waste of resources (e.g. water or cleaning agent) during operation, and also during maintenance. In some preferred embodiments the fluid supply is a water supply, or a fluid supply comprising water and a cleaning agent. In some embodiments the sprinkling means is a nozzle; such as a spray nozzle. In some embodiments the sprinkling means is a spray ball; such as a rotating, static or controlled spray ball. The spray ball allows the washing arm to reach the contours of the interior hull of the (insulated) containers during washing, thereby enhancing the effectiveness of the washing process. This allows for a full washing of the interior in a single movement (e.g. rotation) of the sprinkling tube. In some embodiments, the spray ball can be rotated; for instance, under an angle of 45°, 90°, 180°, etc. Alternatively, other nozzles or combinations of nozzles may be used, but they may require multiple movements of the sprinkling tube to achieve a full washing of the interior.

In some embodiments the sprinkling tube comprises a check valve. In some embodiments the rinsing tube comprises a check valve. In some embodiments the sprinkling tube and the rinsing tube comprise a check valve. The check valve prevents fluid from dripping, thereby further improving the efficiency of the device.

In some embodiments the sprinkling tube has a tube length greater than that of the rinsing tube. The greater length allows the sprinkling tube to better reach the contours of the interior hull of the (insulated) containers during washing, thereby enhancing the effectiveness of the washing process.

In some embodiments the sprinkling tube has a tube length of at least 200 mm to at most 500 mm; preferably 250 mm to 450 mm; more preferably 300 mm to 400 mm; most preferably 330 mm to 370 mm; for example 340 mm; for example 350 mm; for example 360 mm.

In some embodiments the rinsing tube has a tube length of at least 10 mm to at most 100 mm; preferably 20 mm to 80 mm; more preferably 30 mm to 70 mm; most preferably 40 mm to 60 mm; for example 45 mm; for example 50 mm; for example 55 mm.

In some embodiments the sprinkling tube is provided with a mixture comprising water and one or more cleaning agents. The sprinkling tube may comprise an additional compartment or dispenser for providing a cleaning agent, which will be mixed with water during sprinkling.

In some embodiments the sprinkling tube comprises a central shaft which is configured for leading compressed air to the head, wherein the central shaft is operationally coupled to pressure generating means.

In some embodiments the rinsing tube comprises a rinsing utensil, for mechanically removing waste that was not loosened sufficiently as a result of sprinkling.

In some embodiments the washing arm comprises an actuator configured for rotating the second body relative to the first body. Preferably the first body is kept

In some preferred embodiments the washing arm comprises a pneumatic cylinder; for example a pressurized air cylinder. A pneumatic cylinder is particularly well-suited for cleaning devices, since it is not affected by humidity or fluid drips, and the typically compact size allows for easier build-around. The actuator may be attached to the third body with a fastening means; for instance, a hook or hinges. Alternatively, other actuators may be used (e.g. electrical or chemical engines), optionally with the additional adjustments to improve efficiency and security. The actuator may also serve as a supportive or safety mechanism, by blocking the rotation if no washing is desired. This improves the safety of the washing arm. Additionally, the actuator may also ensure the valve is correctly oriented relative to a container, and/or is rotated in the correct direction.

Preferably the actuator is configured to stop the rotation of the second body relative to the first body at a rotational angle γ - as defined above.

In a particular embodiment wherein the actuator is a pneumatic cylinder, the third body is fastened on a first, lower edge to a pneumatic cylinder and on a second, upper edge to a supportive structure, which may be a drying means such as a drying arm.

As a result, the supportive structure will serve as a lever, allowing the second body (and if present, the third body) to rotate over the first body by extension or compression of the pneumatic cylinder, essentially converting linear displacement into a rotational displacement.

In some embodiments the washing arm comprises a container characterization means configured for determining the container type and/or dimensions, wherein the washing arm is configured for executing a specific container washing program based on the determined container type and/or dimensions.

In particular, the container characterization means may identify the container height to improve the positioning of the washing arm relative to the container; for instance, by lowering or raising the washing arm into the centre of the interior hull of said container, thereby improving the washing process.

In particular, the container characterization means may identify the presence of a container door; for instance, if said container door was not opened or is hanging loose, it may prevent the washing arm from colliding with the container door.

The (insulated) container characterization means may comprise one or more sensors (e.g. lasers) configured for determining the height of a container. The movement of a washing arm and/ or containers door drying means preferably adapted according to the determined height of the containers such that optimal washing sequences might be performed.

In a further aspect, the present invention relates to a device for cleaning containers for food, medical or pharmaceutical products the device comprising:
- a washing arm for washing containers, preferably according to one or more embodiments as described herein; and
- a drying means.

In many industries it is sufficient to only clean the interior of a container, which holds the products, since the exterior does not require such thorough cleaning. Moreover, when wetter the exterior can be cumbersome to dry; however, if the exterior is left wet the water may drip on the line causing damage and work hazards. Accordingly, in state-of-art systems where the washing and drying is performed at different locations different sets of covers shielding the exterior are required; for example, to shield the exterior during washing, to shield the exterior during drying (e.g. splattering), and to shield the exterior during transport from the washing to the drying device.

However, the device for cleaning containers as described herein provides a solution to the above problems. In particular by providing a drying means connected directly to the washing arm the efficiency of the cleaning system may be further improved, in addition to reducing the complexity and resources, and/or space required for the device. Importantly, by confining the washing and drying to a single cleaning device it may be easier to shield off the exterior of the container, and/or the remaining sections of the line. This further improves the work safety of the line and longevity of its components (e.g. less water spilling and corrosion).

The drying means is configured for drying the container after washing by the washing arm. The drying means may comprise manual drying tools, such as cloths and/or wipers, or it may be a drying device, for instance a drying device configured for supervised and/or automated drying.

The drying device may comprise one or more air dryers, preferably configured for drying (insulated) containers by means of compressed air. The compressed air might be compressed by one or more high pressure ventilators and might be directed towards the device for drying (insulated) containers by means of a fluidic system comprising a plurality of compressed air ducts. Alternatively, the drying device may comprise one or more device for directing air towards the containers; for example air knives.

In a preferred embodiment the drying means is a drying arm. An example of a suitable drying device may be found described in EP3081887 from LVPEngineering, which is hereby incorporated by reference. Such drying arms may be highly efficiently means for drying containers. In particular, the use of a drying arm for drying containers may allow for efficiently blowing off aqueous cleaning agents and/or rinsing water after container washing, even at temperatures where water does not readily evaporate. Such temperatures may be, for example, at most 1°C, 2°C, 3°C, 4°C, 5°C, or 6°C.

In some embodiments the drying arm is fastened to an actuator. The drying arm may for instance be rotated by means of an actuator, preferably an electric motor. In particular embodiments, the actuator may drive an axle having a distal end and a proximal end, whereby the proximal end is driven by the motor, and whereby the distal end comprises an encoder which is configured for registering the axle's rotational movement. In some embodiments, the axle may run through a hollow shaft which is connected to the cart by means of one or more hinges. Preferably the washing arm is fastened to the drying arm; in particular by a fastening means.

In some preferred embodiments is fastened to a pneumatic cylinder; in particular a pneumatic cylinder further fastened to the washing arm. This allows for controlling the washing arm and the drying arm with a single actuator, thereby reducing complexity and resource, but also reducing the space required for the device.

In some embodiments the drying means is configured to start drying automatically after the washing arm finishes washing.

The drying means may further comprise a container door drying means for drying doors of (insulated) containers while, for example, their inner hull is dried by means of a drying means such as the drying arm. This may speed up the drying process. The (insulated) container door drying means are preferably connected to a system for transporting compressed air.

In a further aspect, the present invention relates to a fluid filtration system; preferably a water filtration system. The fluid filtration system can also be referred to as a fluid reclamation system, or a fluid recycling system.

The presence of a filtering system may serve to protect the device for cleaning containers, in particular the washing arm, from contaminants and waste from leftovers present in the containers. When the water is reused these leftovers may cause clogging of the devices, in addition to causing deposits on the inside of the piping and fittings. Moreover, the contaminants present in the water may be left on the interior hull of the container during rinsing. Additional difficulties arise during and after transport of the container from the washing installation to the drying installation. In particular, reclaiming the water becomes more difficult and cumbersome when the water has to be collected from multiple devices. The fluid filtration system as described herein may allow for efficient collecting and recycling of used fluid, in particular water optionally comprising a cleaning agent. In particular, the recycled fluid may be cleaner, comprising less waste and/or contaminants, thereby further improving the washing and/or cleaning efficiency of the device and/or line. Additionally, the fluid filtration system as described herein may also allow for reduced maintenance costs and/or time, increasing the lifetime of the device and/or line and reducing the amount of workforce and/or time required.

In some embodiments, the fluid (water) filtration system comprises the following devices:
- a first filtering device configured for a first filtering of fluid, preferably (coarser) filtering of waste and/or contaminants with a larger diameter;
- a second filtering device configured for a second filtering of fluid, preferably (moderate) filtering of waste and/or contaminants with a medium diameter;
- a third filtering device configured for a second filtering of fluid, preferably (finer) filtering of waste with and/or contaminants with a smaller diameter;
- a purification device;
- a flushing device for flushing the line to remove remaining waste and/or contaminants, and,
- a suction device for collecting fluid and providing flow.

In some embodiments the filtration system may comprise a reservoir for collecting fluid for filtering.

The first filtering device preferably provides for a coarse filtering of large waste and/or contaminants, which is waste with a diameter of 10 mm of larger, such as 12 mm or 15 mm. Examples of large waste may include foils, wood, carton, paper and other packaging leftovers. The inventors have observed that filtering for waste with a diameter of 10 mm, in particular 12 mm, allows for a particularly well suited first filtering step. Accordingly, by separating said large waste prior to entering the filtration system, the remaining filtering devices will require less maintenance and have increased lifetimes. The first filtering device may comprise a mesh or retainer held in a frame, such as a sieve or sift filter.

In some preferred embodiments the first filtering device comprises a perforated plate disposed at an elevation, and a scraping device configured for scraping the perforated plate into a reservoir. The perforations are suitable for a coarser filtering of waste and/or contaminants with a larger diameter: typical sizes range from at least 10 mm to at most 20 mm; preferably 10 mm to 15 mm; for example 11 mm; for example 12 mm; for example 13 mm. Preferably the elevated perforated plate and scraping device are disposed within a first filtering housing.

The scraping device may comprise a plurality of carbon or polymer blocks or plates that are rotated by means of a belt, such as a conveyor belt. When the blocks or plates scrape over the sieve plate, they will push the waste and/ or contaminants separated by the perforation over the perforated plate into a reservoir. The reservoir is preferably disposed above the perforated plate, thereby allowing the scraping device to scrape upwards away from the fluid flow. The reservoir may comprise means allowing easier emptying, such as hooks or retainers that allow the reservoir to be disconnected and reconnected to the first filtering device after emptying. The emptying may be performed manually or automatically. Preferably the first filtering device is emptied manually.

Preferably the first filtering device is located prior to the suction device, wherein the filtered water passing through the first filtering device enters the suction device or a pipe connected thereto.

The second filtering device preferably provides for a moderate filtering of medium waste and/or contaminants, which is waste with a diameter of 2 mm or larger, such as 5 mm or 8 mm. Any waste with a diameter above 12 mm was preferably already filtered by the first filtering device. Examples of medium waste may include partially dissolved carton and paper forming slurry, and other smaller packaging leftovers. The inventors have observed that filtering for waste with a diameter of 2 mm allows for a particularly well suited second filtering step because lower diameters (e.g. 1 mm, or 0.5 mm) may cause too fast clogging of the filtering device due to build-up of waste, thus requiring too frequent emptying of the filtration system and subsequent downtimes of the line. Accordingly, by separating medium waste prior to entering the finer filtration system, the remaining filtering and purification devices will require less maintenance and have increased lifetimes. The second filtering device may comprise a finer mesh or retainer held in a frame, such as a basket or a candle filter.

In some preferred embodiments the second filtering device comprises a housing and a perforated structure disposed within said housing. The perforated structure may be one or more plates disposed perpendicularly against the flow of water through the second filtering device. Preferably the perforated structure is a rectangular shaped structure with a plurality of perforation, resembling a basket. The latter would allow for easier emptying of withheld waste and/or contaminants. The perforations are suitable for a moderate filtering of waste and/or contaminants with a medium diameter: typical sizes range from at least 1 mm to at most 11 mm; preferably 2 mm to 10 mm; for example 5 mm; for example 7 mm; for example 9. Optionally, different plates having different perforation can be placed in series. Emptying of the second filtering device, in particular the basket may be performed manually or automatically. Preferably the second filtering device is emptied manually. The housing may be provided with means that provide for easier maintenance and check-up, such as a lid providing access to the perforated structure. The lid may comprise one or more windows for observing the volume of waste filtered by the second filtering device; for example a sight glass. The housing may also comprise means for clamping or connecting the lid, such as a tensioning system.

Additionally, the second filtering device may comprise a set of flanges to guide the flow of fluid into and out of the second filtering; preferably flow in from the first filtering device and flow out towards the third filtering device. The flanges are may be disposed at different heights, i.e. the central line of the flow-in flange does not overlap with the central line of the flow-out flange. Preferably the flow-in flange is disposed lower than the flow-out flange, which allows the fluid to flow in below the fluid level at a natural and efficient flow speed. Accordingly, as the fluid level increases the flow-out flange will be reached by passing through the perforated structure. The latter may also provide for an improved filtering, by having the filtering rely on a passive flow (i.e. increasing fluid level) instead of an active flow (i.e. pushed along the fluid flow direction).

The third filtering device preferably provides for a finer filtering of smaller waste and/or contaminants, which is waste with a diameter of 2 mm or lower, such as 0.9 mm, 0.5 mm, or 0.1 mm. Preferably, waste with a diameter above 2 mm was previously filtered by the second filtering device. By providing very fine filtering, the cleaning device may require less maintenance and have increased lifetimes, and the quality of the cleaning may improve. The second filtering device may comprise a filter element that with small pores. The pores are suitable for a fine filtering of waste and/or contaminants with a smaller diameter: typical sizes range from at least 200 µm to at most 1000 µm; preferably 100 µm to 500 µm; for example 200 µm; for example 250 µm; for example 300 µm. Optionally, different filter element having different pore sizes can be placed in series. The inventors have observed that filtering for waste with a diameter 250 µm allows for a particularly well suited third filtering step because lower diameters (e.g. 100 µm, or 150 µm) may cause rapid clogging of the filtering device due to build-up of waste. Additionally, lower diameters may prevent the automated emptying to keep up with the build-up of collected waste; thus requiring down-times of the line.

Preferably the third filtering provides for self-cleaning, for instance by spinning the filter element against a plurality of scraping elements, such as knives configured to scrape the filtered waste and/or contaminants from the filter element; for example, a centrifugal separator. Emptying of the third filtering device, in particular the scraping elements may be performed manually or automatically. Preferably the second filtering device is emptied automatically; for instance, the collected waste is scraped off the filter element and subsequently rinsed out of the device.

The purification device preferably provides for a purification of the fluid from pathogens and microorganisms, such as bacteria, viruses, protozoan cyst and the like. This may improve the quality of the water over a plurality of cleaning cycles and recycling cycles. This may further improve the lifetime of the devices by preventing clogging or depositions. In a preferred embodiment the purification device is an UV-light emitting device.

The flushing device provides for a flushing of the line for removing remaining waste and/or contaminants present in the line, for instance on the ground. The waste may be leftovers that fell out from the containers during the cleaning. The contaminants may be remaining cleaning agents that were not rinsed or drained properly.

In a preferred embodiment the flushing device is tube disposed along the line, preferably disposed at an altitude. The tube may be provided with holes or perforations that allows for spraying a flushing fluid, such as water. By spraying the line, in particular the ground of the line, the remaining waste and/or contaminants will be flushed towards the filtering system, in particular a reservoir leading to the filtering system. Preferably the flushing fluid will forms whirls that loosen depositions of waste and/or contaminant, such as sludge. Additionally, the flushing may provide for additional pressure on the reservoir, which may prevent deposition of waste and/or contaminant.

The flushing device may be provided with filtered fluid from the filtering system, but it may also be connected to a separate fluid supply.

The suction device provides for flow to the fluid in the filtration system. In particular fluid comprising waste and/or contaminants (e.g. sludge) may cause clogging and deposition, thus the pressure exerted by the suction device into the filtration system may loosen and push said waste further along in the filtration system. Additionally, by providing an active flow the tubing and filtering device may be placed in a horizontal plane away from the line (i.e. not requiring vertical build-up), thus reducing complexity and improving efficiency.

In a preferred embodiment the suction device is a water suction pump; for example a centrifugal pump or priming pump.

In a further aspect, the present invention relates to a line for cleaning containers for food, medical or pharmaceutical products, the line comprising:
- at least one device for cleaning containers, preferably according to one or more embodiments as described herein;
- a fluid filtration system;
- an optional container transportation means; and,
- an optional enclosure.

By providing the device for cleaning containers together with the fluid filtration system the efficiency of the line system may be further improved. In particular, the container's interior may be cleaned better and more thoroughly, with less waste of water and resources (e.g. energy consumption) than if only the cleaning device and the fluid filtration system were installed separately. Additionally, also the complexity of the line is reduced, thus improving the user-friendliness for the operator and requiring less space for cleaning of containers. Consequently, the present line may provide highly effective, fast, and/or energy-efficient means for cleaning (insulated) containers.

In some embodiments the enclosure comprises a barrier surrounding the line; this typically includes two or more sidewalls, a roof, and a floor. In addition to protecting the devices present within the enclosure, the enclosure may also provide structural stability to the devices and all the water connections (e.g. pipes, fittings, etc.) connected thereto. Preferably, the enclosure or in particular the floor of the enclosure is provided with drains or gutters to guide the fluid or water to the fluid filtration system. Additionally, the enclosure may be provided with a coating or insulating layer to better resist water and thermal shocks.

In some embodiments the container transportation means comprise a chain conveyor belt. This allows for efficiently transporting containers along a cleaning line. Preferably, the (insulated) containers move continually along the container transportation means, stopping at the cleaning devices.

In some preferred embodiments the container transportation means comprise a chain conveyor belt and a stopper.

In some embodiments the container transportation means comprise one or more stoppers, for example two stoppers; preferably mechanical stoppers. The stoppers may be devices for guiding and/or positioning containers. In particular, stoppers may be clamping devices comprised in container transportation means, for example comprised in a chain line. The stoppers may comprise one or more devices for positioning containers in the direction of transport and/or one or more devices for positioning containers in the direction perpendicular to the direction of transport. Additionally stoppers may allow for accurately positioning containers at washing stations and/or drying stations. Accurately positioning containers may be especially advantageous at washing stations for accurately aligning the fluid passages towards the containers, in particular towards the interior of the containers. This may allow for more efficient washing of containers.

Some stoppers may be configured for aligning containers along the direction of container transport, or perpendicular to the direction of container transport. The stoppers may be retractably driven by one or more pneumatic cylinders. Preferably, the stoppers comprise one or more sensors, for example one or more inductive sensors, for detecting the stopper's position relative to the container.

In some embodiments, the container transportation means may comprise a chain line comprising a series of mechanical stoppers.

In some embodiments the line comprises a container door washing means for washing the container door; preferably, a door washing device.

In some embodiments the door washing means is a sprinkler system mounted alongside the device for cleaning a container. For instance, it may be a tube provided with sprinklers or nozzles that are disposed at an angle to wash a container door. The washing may be performed simultaneously with the washing of the washing arm, or it may be performed separately, for instance on a passing container.

In a particular embodiment the washing device comprises a plurality of sprinklers, for example two sprinklers or four sprinklers, mounted on a joint to allow for orienting the sprinklers. The joint may be a ball joint, which allows for manual adjustment of the sprinkling orientation, but it may also be an automated joint that automatically adjust to the position of the container door. The washing device may comprise a set of valves to prevent dripping or pressure leaks, for example a pinch or squeeze valve.

In some preferred embodiments the washing door means or device share the fluid supply with the device for cleaning containers. As are result no secondary lines need to be connected, thereby reducing complexity and resource, but also reducing the space required for the line. This also improves the efficiency and safety of the line by allowing all of the water supply to be closed off with a single valve.

In some embodiments the line comprises a bottom surface cover; the bottom surface cover preferably comprising a sheet or a plate configured to shield the bottom surface of a container during washing and/or cleaning.

Preferably, the bottom surface of a container further comprises a closure, such as a rubber closure, which closure provides for a waterproof sealing of the bottom surface cover against the container's interior hull bottom. Accordingly, the shielding plate or sheet of the bottom surface cover may be pushed up and/or against said closure to provide for improved shielding. This may prevent any fluid from dripping or leaking from the container's interior onto the area underneath the container.

In a particular embodiment the bottom surface cover comprises a hinge that provides for a displacement of the shielding plate or sheet the bottom surface of a container, or a closure present in the bottom of a container. More in particular, the bottom surface cover may comprise a base, for providing stability and support, onto which an actuator may be installed. Preferably the actuator is a pressured air cylinder. The actuator is preferably configured for connecting or raising the bottom surface cover into a first, shielding position during cleaning of the container, and subsequently withdrawing said cover to a second, stand-by position when the container is transported along the line. Additionally or alternatively, the actuator may also provide motion to a mechanical arm comprising said bottom surface cover.

In some embodiments the bottom surface cover comprises a container characterization means for determining the position of the bottom surface of a container. Alternatively, the position may be provided by a container characterization means (e.g. sensors, lasers) present in the device for cleaning containers. This may allow for the bottom surface cover to automatically connect into the shielding position when a container is provided, for instance via the transportation means.

In some embodiments the line comprises a back surface cover; the back surface cover preferably comprising a sheet or a plate configured to shield the back surface of a container during washing and/or cleaning. Additionally, the back surface cover may also partially or completely shield the side surface(s) of the container.

The back surface cover may comprise a plurality of sheets or plates, such as two plates or three plates, to shield the entire back surface area. Preferably, each plate of the plurality of plates is disposed parallel to one another. This allows for a more efficient covering of the container's exterior surface.

In a particular embodiment the back surface cover may comprise a base, for providing stability and support, onto which an actuator may be installed. Preferably the actuator is a pressured air cylinder. The actuator is preferably configured for connecting or pushing the back surface cover into a first, shielding position during cleaning of the container, and subsequently withdrawing said cover to a second, stand-by position when the container is transported along the line. Additionally or alternatively, the actuator may also provide motion to a mechanical arm comprising said back surface cover.

In some further embodiments the bottom surface cover is operated via a first pressured air cylinder, and the back surface cover is operated via a second pressured air cylinder. Preferably the first and the second pressured air cylinder are provided with pressurized air from a single compressed air valve. This allows for more efficient use of available resources and materials, thereby saving space and maintenance costs.The cleaning and washing devices described herein (e.g. a washing arm, container door washing device, flushing device, etc.) are typically provided with a fluid. This fluid may be provided to the devices or line by means of a pump, whereby the pump feeds pressurized water to the line for cleaning a container. The pressure in the filter may be measured using a pressure sensor, such as a manometer. Additional sensors may also be present on the washing arm or the sprinkling and/or rinsing tube for comparative purposes. Preferably the provided fluid is water, or a fluid predominantly comprising water; preferably filtered water.

Cleaning agents may be provided to water in the fluidic system by means of a metering pump. Preferably, a pressure reducing valve is positioned upstream of the metering pump. This may be advantageous for protecting the metering pump from excessive water pressure.

The fluid supply may comprise one or more, preferably two, reservoirs for buffering fluid supply and/or cleaning agent supply, preferably aqueous cleaning agent supply. This can be useful for ensuring a continuous supply of cleaning agents, preferably aqueous solutions of cleaning agents.

The fluid, preferably water, may be guided to the herein described cleaning and washing devices via a series of pipes and lines, such as one or more water supply lines. Preferably, all the devices are provided with fluid from a single supply line, i.e. a water supply line runs throughout the line for cleaning containers and provides fluid to the flushing device, the container door washing device, and to the water supply of the washing arm. This eliminates the need for having multiple lines and pipes. Optionally, the water supply line may be provided with branching lines and pipes. This eliminates the need to install multiple lines, thereby reducing installation costs and easing maintenance. The skilled person understands that the lines may have different lengths and diameters depending on the location, purpose and connections.

In a further aspect, the present invention relates to a container cleaning installation, the installation comprising one or more lines for cleaning containers according to one or more embodiments as described herein

In some preferred embodiments, the cleaning installation comprises a fluid filtration system according to one or more embodiments as described herein; more preferably a water filtration system according to one or more embodiments as described herein.

In a further aspect, the present invention relates to a method for cleaning containers for food, medical or pharmaceutical products comprising a top surface, a bottom surface, a back surface, two side surfaces and a container door, the method comprising the steps of:
a. providing a line, preferably according to one or more embodiments as described herein;
b. optionally, transporting a container using the container transportation means towards a washing arm according to one or more embodiments as described herein;
c. optionally, covering the bottom surface of the container with a bottom surface cover;
d. washing the interior of the container with a washing arm; and,
e. drying the container with a drying means, preferably a drying arm.

The present method provides a highly efficient way of cleaning (insulated) containers, which may reduce costs and improve cleaning quality. Moreover, by also covering the bottom surface of the container the cleaning step may be more efficient, thereby saving resources (e.g. water and energy consumption) and cleaning time.

In some embodiments the washing is performed with water or a mixture comprising water and one or more cleaning agents.

In some embodiments the washing and/or cleaning is performed at temperatures ranging from at least 1.0°C to at most 10.0°C, preferably at least 1.0°C to at most 6.0°C, more preferably at least 1.5°C to at most 5.0°C, and most preferably at least 2.0°C to at most 4.0°C; for example 3.0°C.

Washing and/or cleaning at low temperatures may have the advantage that containers and/or the cleaning fluid do not have to be excessively heated prior to the washing and/or cleaning process. This may increase the throughput and/or energy efficiency of container cleaning lines. Additionally, the washing and/or cleaning is preferably done at temperatures higher than the melting point of the cleaning agents and rinsing agents which are used, which is commonly around 0°-1°C for aqueous cleaning agents and aqueous rinsing agents.

In some embodiments step c. comprises the steps of:
c1. covering the back surface of the container with a back surface cover; and
c2. washing the container door with a door-washing system.

By covering the back surface of the container the cleaning step may be more efficient, thereby saving resources and cleaning time. The back surface is particularly cumbersome to dry, and often does not require cleaning.

In some embodiments the method further comprises the steps of:
- flushing the line with the flushing device, preferably into a reservoir;
- filtering the collected water with the filtration system according to one or more embodiments as described herein;
- recycling the filtered fluid as a cleaning agent, or as a component in a cleaning agent mixture, for container cleaning.

The filtering may improve the environmental friendliness of cleaning procedures for (insulated) containers. In addition, the method may result in less need of cleaning agent mixtures, which may result in overall process cost reductions.

In some embodiments the flushing is performed every 10 cleaning cycles; preferably every 5 cleaning cycles; more preferably every 3 cleaning cycles; most preferably every cleaning cycle.

In a further aspect, the present invention relates to a use of a valve for a washing arm according to one or more embodiments described herein.

In a further aspect, the present invention relates to a use of a washing arm for washing an interior of container according to one or more embodiments described herein.

In a further aspect, the present invention relates to a use of a device for cleaning containers according to one or more embodiments described herein.

In a further aspect, the present invention relates to a use of a fluid filtration system according to one or more embodiments described herein.

In a further aspect, the present invention relates to a use of a line for cleaning containers according to one or more embodiments described herein.

### EXAMPLES

To better illustrate the properties, advantages and features of the present invention some preferred embodiments are disclosed as examples with reference to the enclosed figures. Accordingly, the present invention discloses many embodiments and adjustments as appreciated by those skilled in the art and the scope of the present invention is by no means limited to one the illustrative examples presented below.

### Example 1

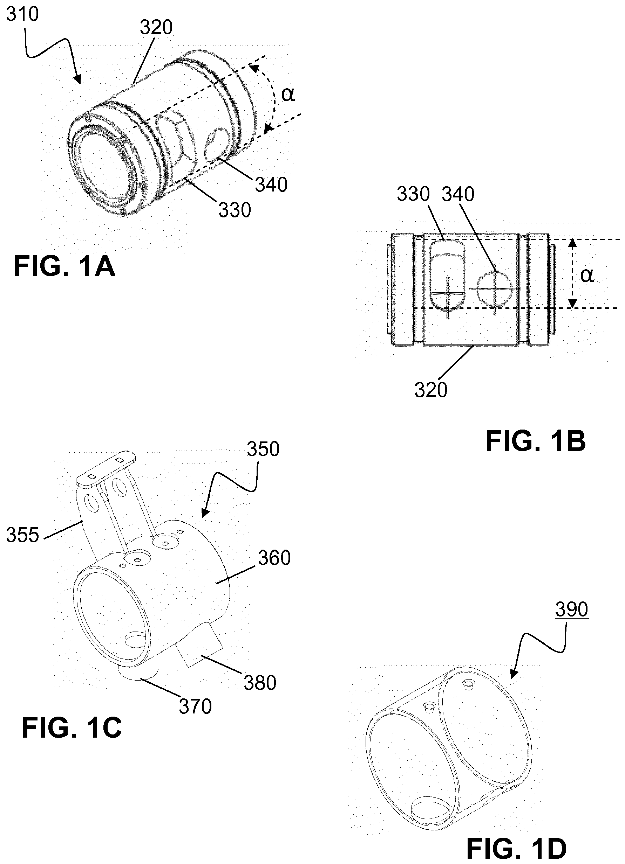

The present example provides a particular embodiment of a valve (300) for a washing arm (200) for washing an interior of containers (900) for food, medical or pharmaceutical products according to the present invention. This particular embodiment is hereby described with reference to Figures 1 to 5.

**Figure 1** shows an overview of the components of the valve (300). In particular, **Figures 1A** and **1B** show a first body (310) from a valve (300) for a washing arm (200), the first body (310) comprising a cylindrical conduit (320), an elongated opening (330) and an annular opening (340).

Additionally illustrated is that the elongated opening (330) spans the elongated opening angle α along the conduit's (320) circumference. In this particular embodiment α is approximately 50°.

**Figure 1C** shows a second body (350) from a valve (300) for a washing arm (200), the second body (350) comprising a cylindrical housing (360), a first second fluid passage (370) and a second fluid passage (380). Additionally, the second body (350) comprises a fastening means (355), for instance for attachment to a washing arm (200) preferably via the actuator. Moreover, the second body (350) comprises a set of bore holes, for instance for attachment to a third body.

**Figure 1D** shows a third body (390) from a valve (300) for a washing arm (200), the third body (390) comprising two openings. Additionally, the third body (390) comprises a set of bore holes, for instance for attachment to the second body.

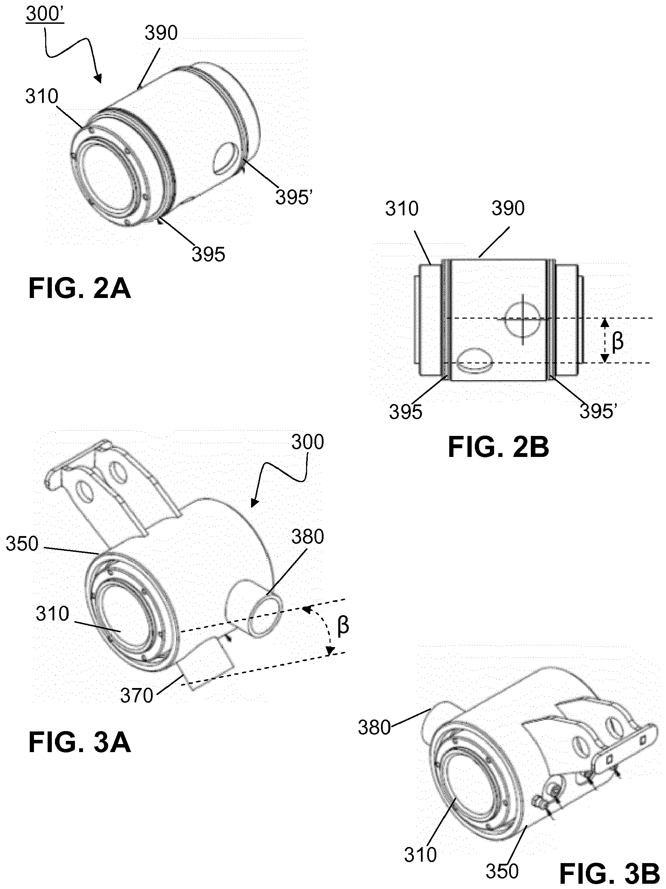

**Figures 2A** and **2B** show how the third body (390) may be disposed over the first body (310). Additionally, a set of sealing members (395) is placed over the third (390) nearby each base. The sealing members (395) may be sealing rings, preferably rubber or silicone rings.

**Figures 3****,** **4** and **5** show different embodiments of the valve (300), wherein the second body (350) is disposed over the first body (310) and optionally, the third body (390) is disposed between the first body (310) and the second body (350). **Figure 3B** also shows how the set of bores may be fastened for connecting the second body (350) to the third body (390).

Additionally illustrated is the angle β between the first fluid passage (370) and the second fluid passage (380), which is also referred to as the fluid passage angle β. In this particular embodiment β is approximately 45°. In particular **figure 3A** shows how the second fluid passage (380) is oriented at an angle β along the housing's circumference relative to the first fluid passage (370); and **figure 2A** shows how the openings in the third body are designed to correspond with angle β to prevent blockage.

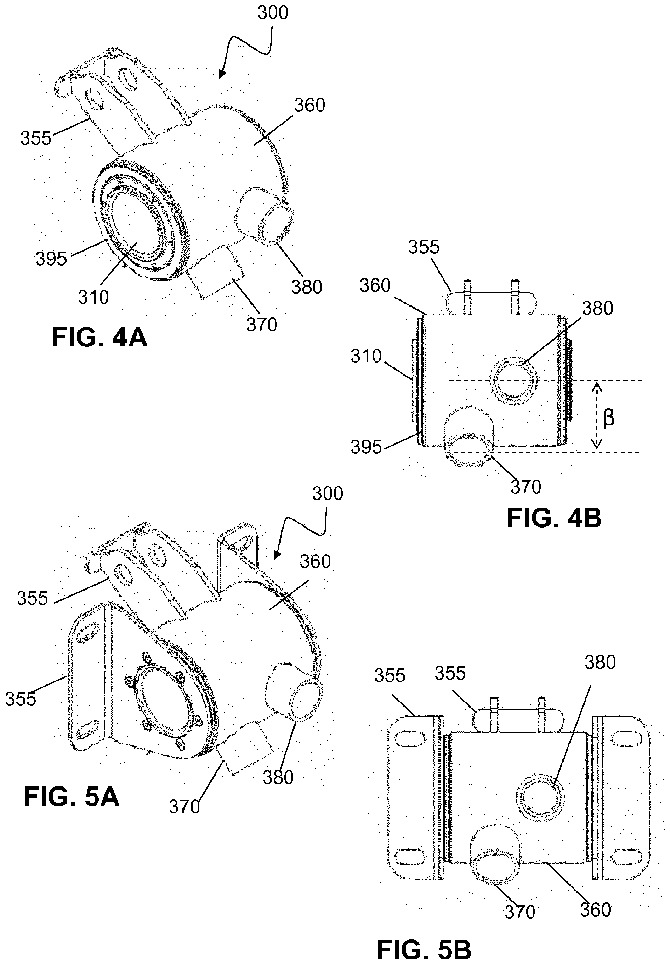

**Figure 4** shows how the valve (300) may be sealed by sealing members (395) placed against the valve (300) at each base. The sealing members (395) may be mechanical end face seals, preferably Polytetrafluoroethylene (PTFE) sealing rings typically utilized in rotating equipment. **Figure 5** shows how a fastening means may be connected to the valve (300) on each base. The fastening means may be a ring, which allows fastening to a washing arm (200).

### Example 2

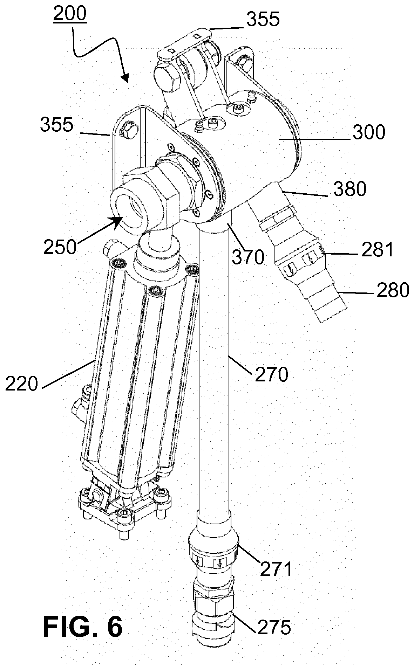

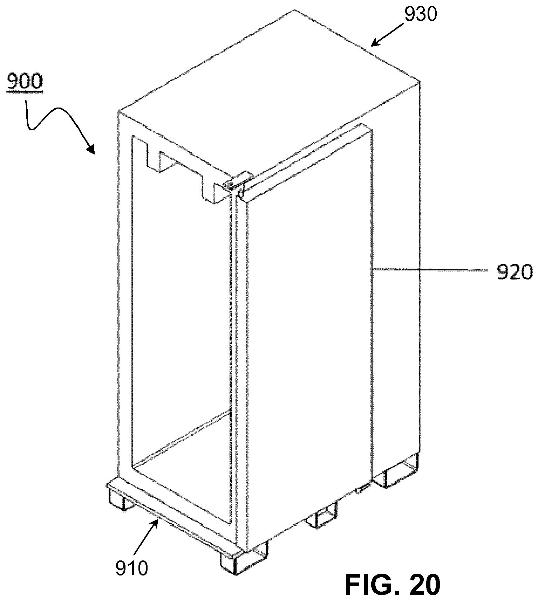

The present example provides a particular embodiment of a washing arm (200) for washing an interior of containers (900) for food, medical or pharmaceutical products according to the present invention. This particular embodiment is hereby described with reference to Figures 6 to 8. An example of a suitable container (900) is shown in Figure 20.

**Figure 6** shows an overview of the components of the washing arm (200) comprising a valve (300) as described in Example 1. The washing arm further comprises a sprinkling tube (270) connected to the first fluid passage (370) of the valve (300), in particular the second body (350). The sprinkling tube (270) comprises a sprinkling means (275), in this example a spray ball, and a check valve (271). The washing arm further comprises a rinsing tube (280) connected to the second fluid passage (380) of the valve (300), in particular the third body (350). The rinsing tube (280) also comprises a check valve (282). Moreover, the washing arm is connected to a fluid supply (250), configured for providing fluid for washing; preferably water or an aqueous solution comprising a cleaning agent.

In this particular example the washing arm comprises three fastening means (355). Firstly, the fastening means (355) located above the valve (300) provides for attachment to an actuator, in this example a pneumatic cylinder (220), such as a pressurized air cylinder. The latter attachment allows for an automated rotation of the washing arm (200), in particular a rotation of the second body (350) over the first body (310). When the pneumatic cylinder (220) compresses it provides for a downward linear displacement that will cause the washing arm to rotate over the axis of valve, causing the sprinkling tube (270) and the rinsing tube (280) to move upwards. Similarly, when the pneumatic cylinder (220) extends it provides for an upward linear displacement that will cause the washing arm to rotate over the axis of valve, causing the sprinkling tube (270) and the rinsing tube (280) to move downwards.

The rotation is made possible because of the second and third attachment means (355) located on each side of the valve (300), in particular contiguous to the bases of the first body (310). The latter attachment means are provided with a ring allowing for the linear displacement of the pneumatic cylinder (220) to be converted into a rotational displacement.

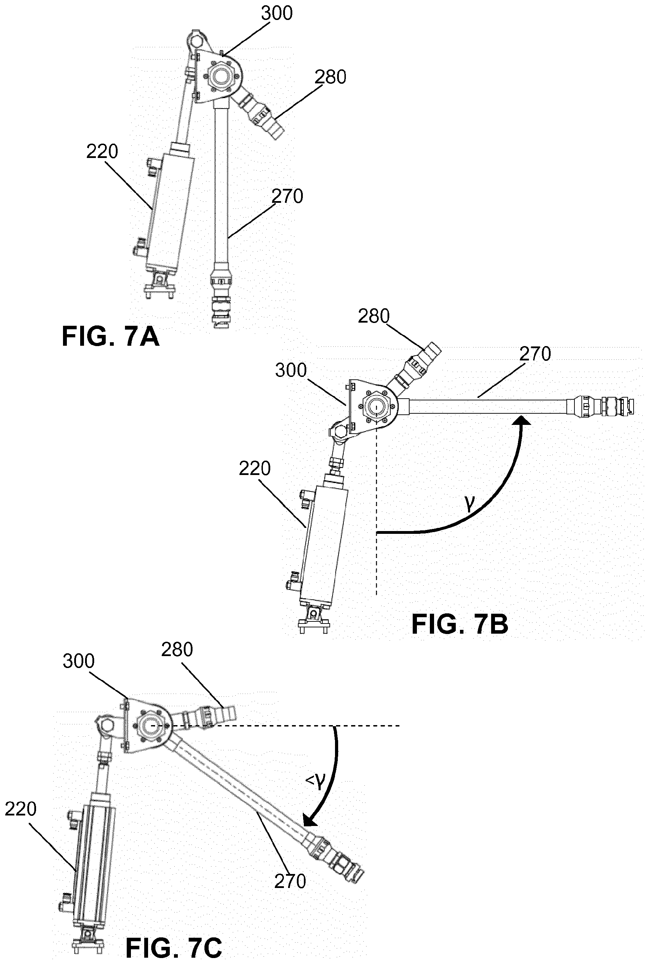

**Figure 7** shows how the above described rotational displacement allows for a washing cycle to start.

In particular, **Figure 7A** shows the washing arm (200) in a first, neutral position between washing cycles. The pressurized air cylinder (220) is fully extended, causing the sprinkling tube (270) and the rinsing tube (280) to be both oriented downwards, which rotates the second body (350) over the first body's (310) annular (340) and elongated (330) openings, thereby prevent any fluid flow into the first fluid passage and/or the second fluid passage. Optionally, an (external) valve may be closed off to prevent fluid flow to the washing arm (200).

Next, **Figure 7B** shows the washing arm (200) in a second, sprinkling position, which initiates the washing cycle. To achieve the second position, the pressurized air cylinder (220) becomes fully compressed, causing the sprinkling tube (270) to rotate over the full rotational angle γ and orient the sprinkling tube (270) sideways, which typically corresponds with the position of a provided container (900). In this particular embodiment the rotational angle γ is 90°. The upward rotational movement thus rotates the second body (350) over the first body's (310) in a way that aligns the annular opening (340) with the first fluid passage (370), thereby enabling a flow of fluid into the sprinkling tube (270) after opening of the optional (external) valves. The sprinkling tube (270) can now be used for extensively sprinkling the interior hull of the container (900) to loosen and/or remove waste and/or contaminants present in the container (900).

Lastly, **Figure 7C** shows the washing arm (200) in a third, rinsing position, which terminates the washing cycle. The pressurized air cylinder (220) becomes partially compressed, causing the rinsing tube (270) to rotate downwards over and be oriented sideways instead, which typically corresponds with the position of a container (900). In a particular example wherein the elongated openings spans an angle α of 50° and wherein the fluid passage angle β is 45°, the start of the third position will correspond with half the angle γ, which is approximately 45°. Accordingly, the downward rotational movement rotates the second body (350) over the first body's (310) in a way that aligns the elongated opening (330) with the second fluid passage (380), thereby enabling a fluid flow into the rinsing tube (280). The rinsing tube (270) can now be used for rinsing the interior hull of the container (900) of waste and/or contaminants that were loosened during the above sprinkling step. The rinsing will continue during the downward motion of the washing arm (200) until the first, neutral position is reached. The full downward motion will correspond with the rotational angle γ. Optionally, the (external) valve may be closed off again preventing further fluid flow to the washing arm (200).

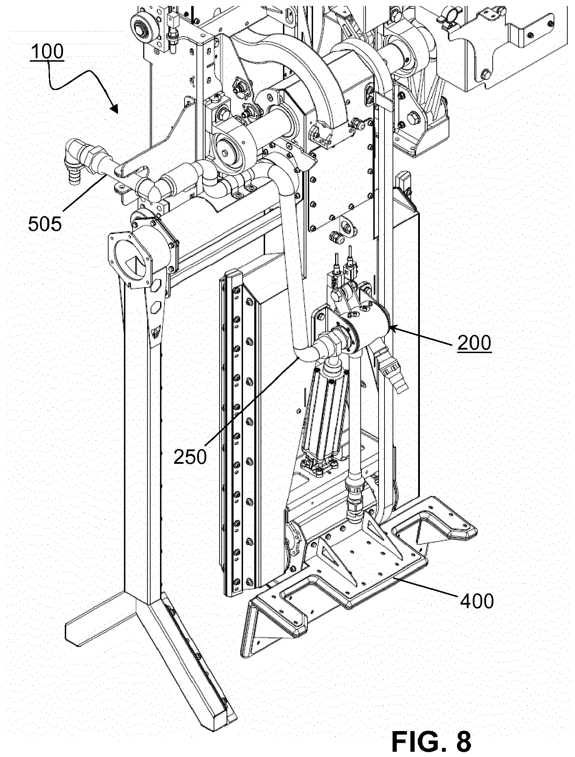

**Figure 8** shows a device (100) for cleaning containers (900) comprising the above described washing arm (200) and a drying means (400). In this particular example the drying means is a drying arm. The drying arm is fastened to the washing arm (200) with the second and third attachment means (355) located on each side of the valve (300), and is also fastened to the pressurized air cylinder (220).

### Example 3

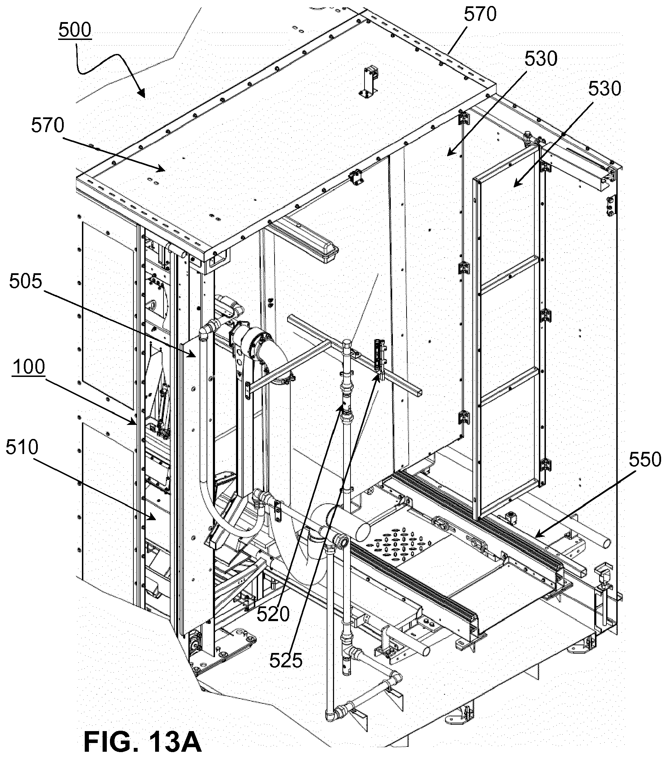

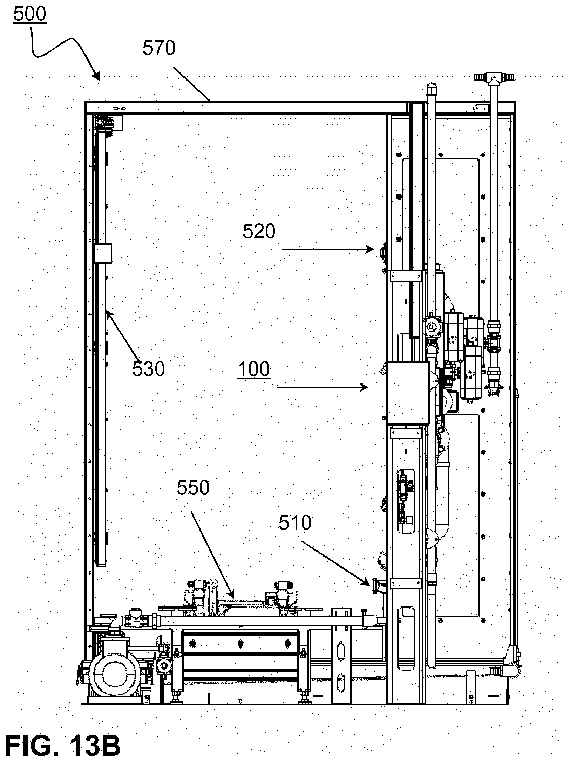

The present example provides a particular embodiment of a filtration system (600). This particular embodiment is hereby described with reference to Figures 13 to 18.

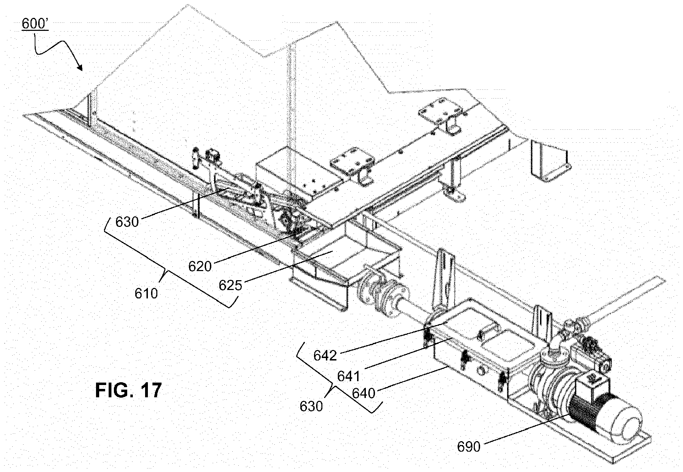

**Figure 17** shows a first part of the filtration system (600'), comprising a first filtering device (610), a second filtering device (630), and a suction device (690). The suction device (690), in this particular embodiment a suction pump, is placed after the second filtering device (630) to provide for a flow of fluid through the first filtering (610) and the second filtering device (630) device.

The first filtering device comprises a perforated plate (615) disposed at an elevation, and a scraping device (620) configured for scraping the perforated plate (615), and a reservoir (625). In this particular embodiment the first filtering device (610) is configured for filtering waste and/or contaminants with a diameter larger or equal to 12 mm.

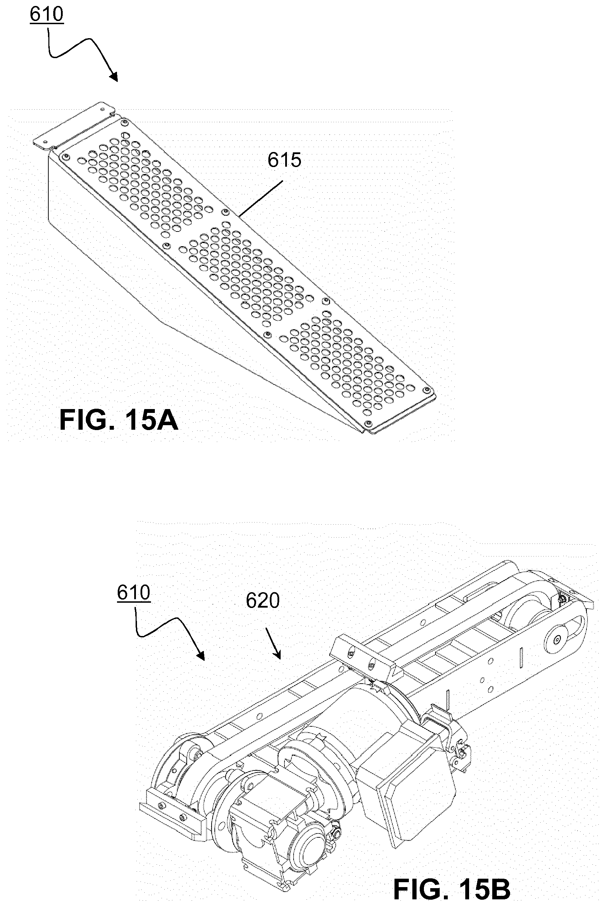

A more detailed view of a particular embodiment of a perforated plate (615) is shown in **Figure 15A****.** A more detailed view of a particular embodiment of scraping device (620) is shown in **Figure 15B****.**

The second filtering device (630) comprises a perforated structure (635); a casing (640) comprising flow-in flange (645) and a flow-out flange (646); and a lid (641) comprising a window (642). In this particular embodiment the first filtering device (620) is configured for filtering waste and/or contaminants with a diameter larger or equal to 2 mm.

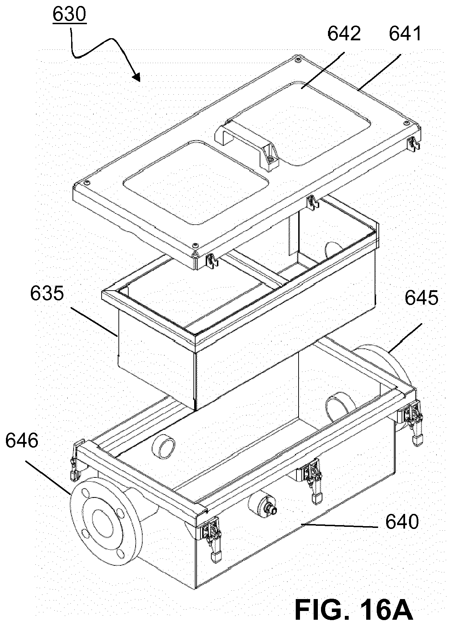

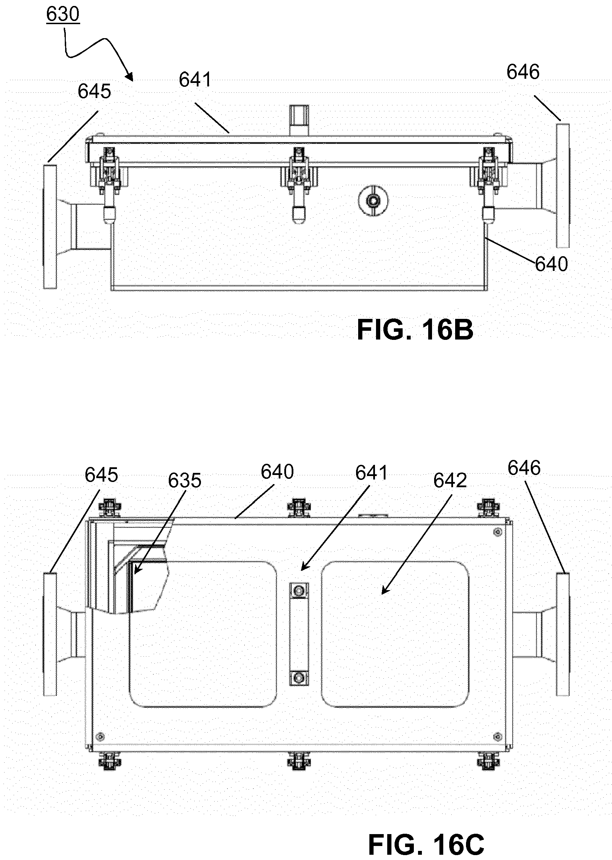

A more detailed view of a particular embodiment of the second filtering device (630) is shown in **Figure 16A****,** which illustrates how the perforated structure (635) may be disposed inside the casing (640) with the lid (641) on top. Additionally, **Figure 16B** illustrates how the flow-in flange (645) and the flow-out flange (646) are disposed at different heights, i.e. the central line of the flow-in flange (645) does not overlap with the central line of the flow-out flange (646). In particular, the flow-out flange (646) is disposed higher than the flow-in flange (645). **Figure 16C** illustrates how the windows (642) in the lid (641) may show the level of waste and/or contaminants gather inside the second filtering device (630).

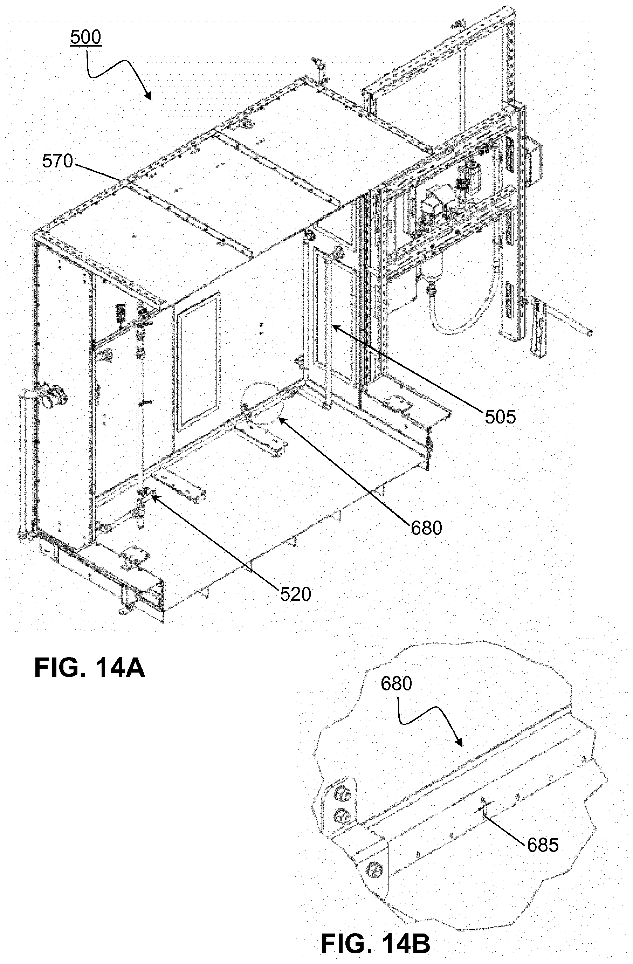

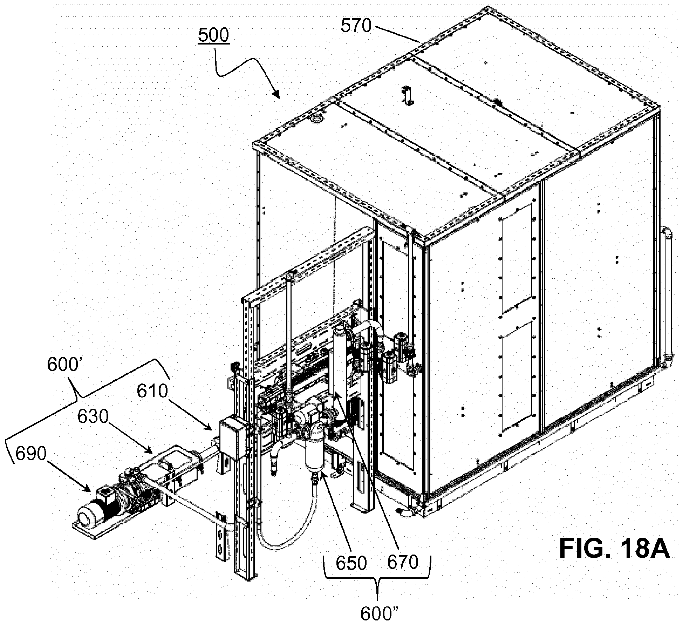

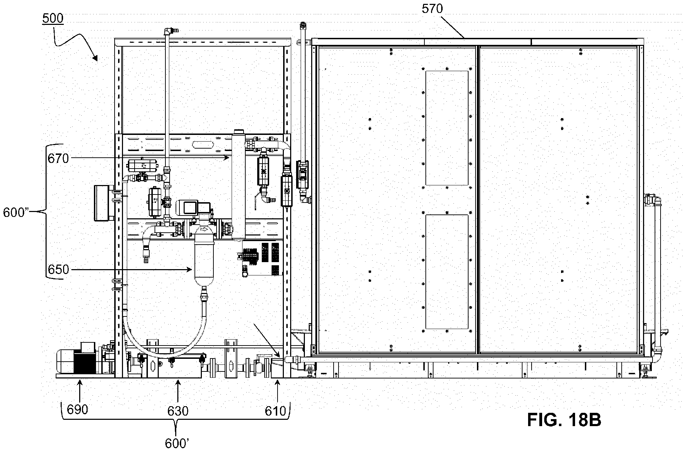

Additionally, **Figure 14A** shows an exemplary embodiment of a flushing device (680), comprising flushing pores (685). A more detailed view of the flushing pores (685) is shown in **Figure 14B****.** The flushing device is configured for flushing a line (500) of waste and/or contaminants towards the filtration system (600). In this particular embodiment the flushing device (680) is provided with water from the same water supply line (505) that provides water to the container door washing device (520), and to the water supply (250) of the washing arm (200). This eliminates the need for having multiple lines and pipes. **Figures 18A** and **18B** shows the complete filtration system (600), comprising the first part (600', which is described above, and the second part (600") of said filtration system (600), which comprises the third filtering device (650) and the purification device (670).

In this particular embodiment the third filtering device (650) is a self-cleaning filter element configured for filtering waste and/or contaminants with a diameter larger or equal to 150 µm.

In this particular embodiment the purification device (670) is an UV-light emitting device configured for purification of pathogens and microorganisms, such as bacteria, viruses, protozoan cyst and the like.

### Example 4

The present example provides a particular embodiment of a line (500) for cleaning containers (900) for food, medical or pharmaceutical products according to the present invention. This particular embodiment is hereby described with reference to Figures 6 to 8 and 19. An example of a suitable container (900) is shown in Figure 20.

**Figure 13A** and **figure 13B** show a line (500) for cleaning containers (900), the line (500) comprising at least one device (100) for cleaning containers (900), for instance the device described in Example 2; a container transportation means (550), in this particular example the container transportation means (550) is a chain conveyor belt having a plurality of mechanical stoppers; a bottom surface cover (510); a container door washing device (520); a back surface cover (530); and an enclosure (570).

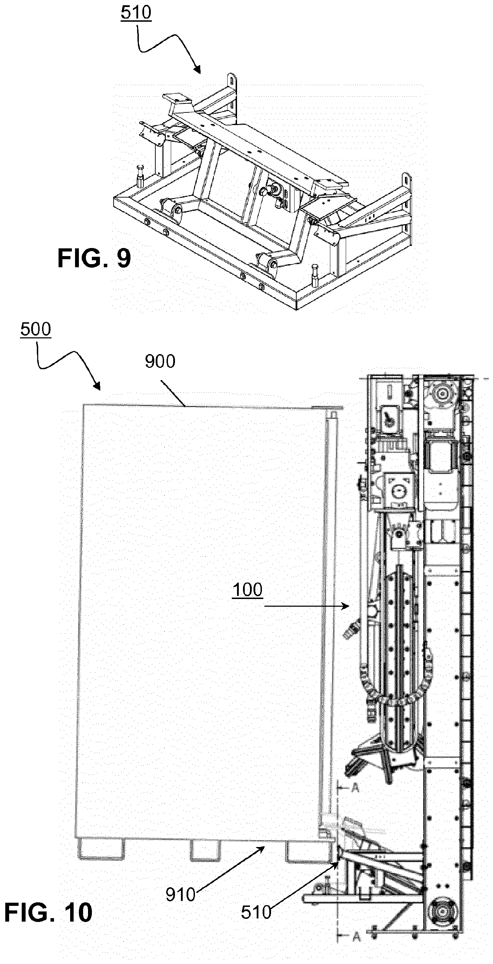

A more detailed view of a particular embodiment of a bottom surface cover (510) is shown in **figure 9****.** Additionally, **figure 9** shows how a shielding plate of the bottom surface cover (510) may attach to a container (900), thereby shielding the bottom surface (910) from any fluid during washing with the washing (200), and also any fluid that may drip out the container (900) during drying with the drying means (400).

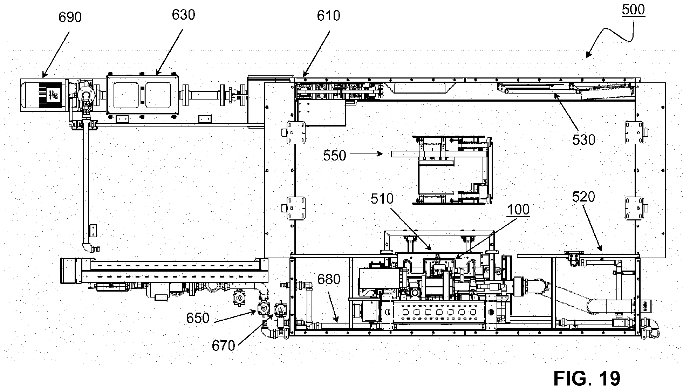

Additionally, the **figure 19** shows a preferred embodiment of a line, comprising a filtration system (600). The filtration system (600) may be the filtration system (600) as described in Example 3. In this particular embodiment most if not all of the fluid used for cleaning the containers is filtered, purified and subsequently guided to the device (100) for cleaning containers, in particular the washing arm (200), for recycled use. This way a particularly efficient and self-sustaining line (500) is provided.

## Claims

1. A valve (300) for a washing arm (200) comprising a first body (310) and a second body (350);
- the first body (310) comprising a cylindrical conduit (320) having a base and circumference; the conduit (320) comprising an elongated opening (330) spanning an angle α along the conduit's circumference, and an annular opening (340) disposed adjacent to an extremity of the elongated opening (330) and closer to the conduit's base relative to the elongated opening (330);
- the second body (350) comprising a cylindrical housing (360) having a circumference and base greater than that of the first body (310); the housing (360) comprising a first (370) and a second fluid passage (380) projecting perpendicularly out of the housing's circumference; wherein the second fluid passage (380) is oriented at an angle β along the housing's circumference relative to the first fluid passage (370); wherein the second fluid passage (380) is closer to the housing's base relative to the first fluid passage (370);
- wherein the angle α is greater than or at least equal to the angle β, preferably at most 15°; more preferably 10°; most preferably 5° or less;
- wherein the second body (310) is disposed over the first body (350) whereby the annular opening (340) is configured to align with the first fluid passage (370) and the elongated opening (330) is configured to align with the second fluid passage (380); and,
- wherein the second body (350) is configured to rotate relative to the first body (310) to close or open the first (370) and/or the second fluid passage (380).

2. The valve according to claim 1, wherein the elongated opening (330) spans an angle α of at least 40° to at most 60° along the conduit's circumference; preferably 45° to 55°, more preferably 48° to 52°, most preferably 50°; and the second fluid passage (380) is oriented at an angle β of at least 35° to 55° along the housing's circumference relative to the first fluid passage (370), more preferably 40° to 50°, more preferably 43° to 47°, most preferably 45°.

3. The valve according to any one of claims 1 or 2, wherein the valve (300) comprises a third body (390); the third body (390) comprising two openings corresponding with the first (370) and the second fluid passage (380) of the second body (350); wherein the third body (390) is attached to the second body (350) and disposed between the first body (310) and the second body (350); and,
wherein the third body (390) is configured to allow, preferably improve, the rotation of the second body (350) relative to the first body (310).

4. A washing arm (200) for washing an interior of containers (900) for food, medical or pharmaceutical products; the washing arm (200) comprising:
- a valve (300) according to any one of claims 1 to 3;
- a sprinkling tube (270) connected to the first fluid passage (370) and comprising a sprinkling means (275);
- a rinsing tube (280) connected to the second fluid passage (380);
- a fluid supply (250) connected to the valve (300); preferably a water supply.

5. The washing arm (200) according to claim 4, further comprising an actuator configured for rotating the second body (350) relative to the first body (310); preferably wherein the actuator is a pneumatic cylinder (220).

6. The washing arm (200) according to any one of claims 4 or 5, further comprising a container characterization means configured for determining the container type and/or dimensions, wherein the washing arm (200) is configured for executing a specific container washing program based on the determined container type and/or dimensions.

7. A device (100) for cleaning containers (900) for food, medical or pharmaceutical products; the device (100) comprising:
- a washing arm (200) according to any one of claims 4 to 6; and
- a drying means (400).

8. The device (100) according to claim 7, wherein the drying means (400) is a drying arm and the washing arm (200) is fastened to the drying arm, for example by a fastening means of the outer body (350); preferably fastened via the actuator; preferably via the pneumatic cylinder (220).

9. The device (100) according to any one of claims 7 or 8, wherein the drying means (400) is configured to start drying automatically after the washing arm (100) finishes washing.

10. A line (500) for cleaning containers (900) for food, medical or pharmaceutical products; the containers comprising a top surface, a bottom surface (910), a back surface (930), two side surfaces and a container door (920); the line (500) comprising:
- at least one device (100) according to any one of claims 7 to 9;
- a fluid filtration system (600); preferably water filtration system (600);
- an optional container transportation means (550), preferably comprising a chain conveyor belt and at least one mechanical stopper; and,
- an optional enclosure (570).

11. The line (500) according to 10, further comprising one of more of the following:
- a bottom surface cover (510), comprising a sheet or a plate configured to shield the bottom surface (910) during cleaning;
- a container door washing device (520) for washing the container door (920); and/or,
- a back surface cover (530), comprising a set of sheets or plates that are configured to shield the back surface (930) during cleaning.

12. The line (500) according to any of claims 10 or 11, wherein the fluid filtration system (600) comprises the following devices:
- a first filtering device configured for a first filtering of fluid, preferably coarser filtering of waste and/or contaminants with a larger diameter;
- a second filtering device configured for a second filtering of fluid, preferably moderate filtering of waste and/or contaminants with a medium diameter;
- a third filtering device configured for a second filtering of fluid, preferably finer filtering of waste with and/or contaminants with a smaller diameter;
- a purification device (670), preferably an UV-light emitting device; and,
- a flushing device (680) for flushing the line (500) to remove remaining waste/or contaminants, preferably into a reservoir, and,
- a suction device (690) for collecting fluid and providing flow.

13. A method for cleaning containers (900) for food, medical or pharmaceutical products comprising a top surface, a bottom surface (910), a back surface (930), two side surfaces and a container door (920), the method comprising the steps of:
a. providing a line (500), preferably according to any one of claims 11 or 12;
b. optionally, transporting a container (900) using the container transportation means (550) towards a washing arm (200) according to any one of claims 4 to 6;
c. optionally, covering the bottom surface (910) of the container (900) with a bottom surface cover (510);
d. washing the interior of the container (900) with the washing arm (200); and,
e. drying the container (900) with a drying means (400), preferably a drying arm.

14. The method according to claim 13, wherein step c. comprises the steps of:
c1. covering the back surface (930) of the container (900) with a back surface cover (530); and,
c2. washing the container door (920) with a door-washing system (520).

15. The method according to any one of claims 13 or 14, further comprising the steps of:
- flushing the line (500) with the flushing device (680), preferably into a reservoir;
- filtering the collected water with the filtration system (600); and,
- recycling the filtered as a cleaning agent, or as a component in a cleaning agent mixture, for container cleaning.
